# FASCICULE DE BREVET EUROPEEN

(11) **EP 4 377 202 B1**
(45) Date de publication et mention de la délivrance du brevet: **24.09.2025**
(21) Numéro de dépôt: 22762125.7
(22) Date de dépôt: 28.07.2022
(51) Int. Cl.: B64C 11/00, B64C 11/20, B64C 11/48, B64D 27/00, B64C 11/18, F01D 5/14, F01D 17/16, F04D 29/32, F04D 29/54

(54) **PROPULSEUR POUR UN AÉRONEF**
ANTRIEBSEINHEIT FÜR EIN FLUGZEUG
PROPULSION UNIT FOR AN AIRCRAFT

(30) Priorité: 29.07.2021 FR 2108287
(43) Date de publication de la demande: 05.06.2024
(73) Titulaire: SAFRAN AIRCRAFT ENGINES, 75015 Paris (FR)
(72) Inventeur: GEA AGUILERA, Fernando, 77550 MOISSY-CRAMAYEL (FR); BINDER, Anthony, 77550 MOISSY-CRAMAYEL (FR); DUBOIS, Adrien Clément Marcel, 77550 MOISSY-CRAMAYEL (FR); GRUBER, Mathieu, Simon, Paul, 77550 MOISSY-CRAMAYEL (FR); JOUDON, Vincent, 77550 MOISSY-CRAMAYEL (FR)
(74) Mandataire: Ernest Gutmann - Yves Plasseraud S.A.S.
(86) Numéro de dépôt international: PCT/FR2022/051521
(87) Numéro de publication internationale: WO 2023/007098

(56) Documents cités:
- EP-A1- 2 521 851
- WO-A1-2012/110267
- FR-A1- 2 940 247
- FR-A1- 2 986 285
- FR-A1- 3 073 016
- FR-A1- 3 083 207
- FR-A1- 3 103 231
- US-A1- 2013 164 488

## Description

### Domaine technique de l'invention

L'invention concerne un propulseur aéronautique, en particulier d'avion, le long duquel un écoulement gazeux peut circuler d'amont vers l'aval, le propulseur présentant un axe longitudinal central (X), et comprenant:
- une première série de pales,
- une deuxième série de pales positionnées à l'aval de la première série de pales, les première et deuxième séries de pales définissant chacune une hélice non-carénée, dont au moins un rotor non-caréné (« open rotor » ou « unducted fan » en anglais) pouvant être entraîné en rotation,
- (au moins) un moteur (que l'on peut appeler moteur central), pour ledit entraînement en rotation autour de l'axe longitudinal central des pales de l'une au moins des première série de pales et deuxième série de pales, et
- une nacelle qui peut renfermer le moteur.

L'expression « non-caréné » correspond donc aux expressions anglo-saxonnes « open » (comme open rotor) ou « unducted » (comme unducted fan).

Ci-après les termes pale et aube désignent la même chose.

Le moteur peut être un moteur thermique, en particulier turbomoteur, turboréacteur, turbosoufflante à faible taux de dilution, turbosoufflante à fort taux de dilution, turbosoufflante à engrenages ou à boitier de réduction de vitesse, turboréacteur à turbines contra-rotatives, un moteur électrique, un moteur à hydrogène, ou un moteur hybride : thermique et/ou électrique et/ou à hydrogène.

L'utilisation de plusieurs moteurs n'est donc bien entendu pas exclue.

En tant que source(s) d'énergie du(des) moteur(s), on peut citer les carburants à base de kérosène, l'essence pour aviation, le diesel, les biocarburants pour aviation, l'électricité, l'hydrogène.

L'invention est donc applicable notamment :
- aux turbomachines de type « open rotor(s) » (par exemple, un « Contra-Rotating Open Rotor », CROR : hélices non-carénées contrarotatives) et « open rotor-stator » (par exemple, un « Unducted Single Fan », USF : hélice ou soufflante unique non carénée suivie d'un redresseur), ci-après « rotor(s) non-caréné(s) » ou « à rotor et stator non-carénés » formant un système d'hélices,
- aux turbomachines pouvant être un turbopropulseur, mais pouvant alternativement être un turboréacteur à soufflante contrarotative ou à couple rotor et stator non-carénés.

Il est rappelé qu'en aéronautique une turbomachine est un propulseur à turbine(s) à gaz.

### Etat de la technique antérieure

Notamment parmi les moteurs à turbine à gaz, on en connaît utilisant une architecture de type à rotor(s) non-caréné(s) ou à rotor et stator non-carénés.

Par exemple, un turboréacteur à double flux fonctionne sur le principe qu'un moteur de turbine à gaz entraîne une soufflante (appelée « fan »), la soufflante étant située à un emplacement radial entre une nacelle du moteur et le moyeu du moteur.

Un moteur à rotor(s) non-caréné(s) ou à rotor et stator non-carénés fonctionne différemment, avec la soufflante située, radialement à l'axe de rotation du moteur central, à l'extérieur de la nacelle du moteur central. Cela permet l'utilisation de pales de soufflante (ou hélice) qui peuvent être plus grandes et capables d'agir sur un plus grand volume d'air que pour un turboréacteur à double flux caréné. On peut améliorer ainsi le taux de dilution (« ByPass Ratio », BPR, en anglais) et le rendement propulsif par rapport aux moteurs conventionnels. Sur un moteur à turbine(s) à gaz, l'invention ci-après détaillée s'applique ici que le ou lesdits rotor(s) non-caréné(s) ou à rotor et stator non-carénés soient disposé en amont de la chambre de combustion (configuration appelée « puller » ou tracteur) ou en aval d'elle (configuration appelée « pusher » ou pousseur).

En configuration « puller » au moins la première série de pales :
- est entraînée en rotation autour de l'axe longitudinal central, et
- est située au niveau du(ou des) compresseur(s) du moteur et/ou du boitier de réduction de vitesse (« gearbox », en anglais), s'il en existe et si le moteur est un moteur à turbine(s) à gaz .

En configuration « pusher » au moins la première série de pales :
- est entraînée en rotation autour de l'axe longitudinal central, et
- est située au niveau de la(ou des) turbine(s) du moteur si le moteur est un moteur à turbine(s) à gaz.

Dans chacun de ces deux cas, au sein du système d'hélice(s), il peut être envisagé de placer la turbine de puissance du moteur central qui entraîne le ou les rotors, en amont, en aval ou au niveau de ces hélices contrarotatives ou d'un couple hélice de rotor et redresseur de stator.

Cela est également applicable pour la position d'un boitier de réduction de vitesse (par exemple, un réducteur différentiel à train épicycloïdal, comme divulgué par EP2521851) dans le cas d'un moteur central avec un système à engrenages vis-à-vis de la ou des hélices de rotor.

En effet, sur un moteur à turbine(s) à gaz, notamment pour un cas CROR, il peut être très pertinent d'interposer un boitier de réduction de vitesse entre les pales considérées et la (ou l'une des) turbine(s), de manière que les pales de l'hélice amont et/ou aval en cause tournent à une vitesse moindre par rapport à la (ou l'une des) turbine(s).

Cela est également applicable pour la position du train épicycloïdal dans le cas d'un turbopropulseur (à train épicycloïdal) vis-à-vis de la ou des hélices de rotor.

Ainsi, dans le domaine, on connait un propulseur aéronautique le long duquel un écoulement gazeux peut circuler d'amont vers l'aval, le propulseur présentant un axe longitudinal central (X), et comprenant:
- une première série de pales,
- une deuxième série de pales positionnées à l'aval de la première série de pales,
- des moyens (appelés parfois ci-après premiers moyens) d'entrainement , pour entraîner en rotation autour de l'axe longitudinal central les pales de l'une au moins des première série de pales et deuxième série de pales,
- une nacelle qui présente une surface externe aérodynamique par rapport à laquelle la première série de pales et la deuxième série de pales font saillie, radialement à l'axe longitudinal central, chaque pale de la première série de pales et de la deuxième série de pales présentant :
   -- une extrémité libre opposée à une extrémité de connexion formant un pied de pale proche de la nacelle,
   -- une face d'intrados et une face d'extrados,
   -- une corde C située à un rayon défini centré sur l'axe longitudinal central,
   -- un rayon Ri entre l'axe longitudinal central et un emplacement qui vient de niveau avec la surface externe de la nacelle, cet emplacement étant situé :
      --- sur la pale ou
      --- sur un bras de calage de la pale,
   -- un rayon Re entre l'axe longitudinal central et un emplacement sur l'extrémité libre de la pale le plus éloigné de l'axe longitudinal central X, suivant une direction transversale à l'axe central, et
   -- une envergure (distance Re-Ri) définie, radialement à l'axe longitudinal central, entre l'extrémité libre et l'extrémité de connexion, suivant ladite direction transversale, certaines au moins des pales de la première série de pales étant à (angle de) calage variable, de sorte que chacune d'elles puissent pivoter autour d'un dit bras de calage auquel ladite pale est fixée, autour d'un axe de calage qui traverse la pale, et/ou certaines au moins des pales de la deuxième série de pales étant aussi à (angle de) calage variable, de sorte que chacune d'elles puissent pivoter autour d'un dit bras de calage auquel ladite pale est fixée, autour d'un axe de calage qui traverse la pale.

La première série de pales et la deuxième série de pales (ou première hélice et deuxième hélice) sont donc espacé(e)s axialement l'un(e) de l'autre.

Il a été ci-avant compris qu'un propulseur aéronautique est un dispositif de production d'une énergie qui assure, dans le domaine de la navigation aérienne, le déplacement d'un mobile et/ou le fonctionnement d'un moteur. - Il sera par ailleurs noté que, quand « radial(ement) » exprime une orientation (comme celles des deux séries de pales), ce terme couvre plus généralement toute direction orientée en(de) travers par rapport à l'axe de référence, en l'espèce l'axe X ; une stricte perpendicularité n'est donc pas requise -.

De fait, on connaît déjà des propulseurs aéronautiques à turbines à gaz (où le moteur est souvent appelé « core engine ») qui comprennent des moyens d'entrainement pour faire pivoter la pale concernée via le bras de calage auquel elle est fixée, ceci autour de son axe de calage.

De façon connue dans d'autres applications, il s'agit d'un système de calage de pale (PCM : Pitch Change Mechanism/mécanisme de changement de pas ou de calage variable), relié au bras de calage de la pale en pied de pale.

Un problème rencontré concerne quoi qu'il en soit encore le bruit généré par le propulseur. La tenue mécanique, le rendement, la performance aérodynamique peuvent être aussi concernés, ainsi que d'autres aspects ci-après cités.

Notamment en améliorant le rendement et/ou la performance aérodynamique, un impact de lutte contre le réchauffement climatique est également visé.

WO2012110267 A1 divulgue une pale d'hélice ainsi qu'un groupe motopropulseur de type CROR muni de ladite pale pour un aéronef, chaque pale avant présentant un bord de fuite le long duquel s'étendent des ondulations, lesdites ondulations présentant des sommets de dent et des creux de dent se succédant alternativement.

US2013/0164488 A1 divulgue des profils aérodynamiques et un procédé de fabrication correspondant. FR3103231 A1 divulgue une turbomachine à aubes ondulées.

### Présentation de l'invention

L'invention vise à répondre à tout ou partie de ces problèmes, de manière simple, fiable et peu onéreuse.

A cet effet, l'invention concerne donc un propulseur aéronautique conforme à ce qui mentionné ci-avant, à première et deuxième séries de pales non-carénées (type CROR/USF par exemple) et qui comprend donc notamment :
- une dite première série de pales et une dite deuxième série de pales positionnées à l'aval de la première série de pales,
- des premiers moyens d'entrainement pour entrainer en rotation autour de l'axe longitudinal central la première série de pales et/ou la deuxième série de pales,
- des seconds moyens d'entrainement pour faire pivoter au moins une desdites pales via son bras de calage auquel elle est fixée, ceci autour de son axe de calage, de sorte que :
   -- certaines au moins des pales de la première série de pales soient à calage variable, et/ou
   -- certaines au moins des pales de la deuxième série de pales soient à calage variable.

Outre ce qui précède, il sera prévu, sur ce propulseur aéronautique :
- que l'une au moins des pales de la première série de pales présente un bord de fuite (ci-après dénommé parfois BF) présentant des ondulations (serrations en anglais), et/ou
- que l'une au moins des pales de la deuxième série de pales présente un bord d'attaque (ci-après dénommé parfois BA) présentant des ondulations, et/ou:
- que certaines au moins desdites pales de la première série de pales et/ou de la deuxième série de pales présentent chacune, suivant l'envergure (L) de la pale) ou radialement à l'axe longitudinal central (X), une variation d'angle de calage (Δγ) inférieure à 45°, entre :
   -- une première droite reliant le bord d'attaque et le bord de fuite, à un premier rayon où est situé l'un desdits sommets de dent et
   -- une deuxième droite reliant le bord d'attaque et le bord de fuite, à un deuxième rayon où est situé l'un desdits creux de dent, adjacent audit un des sommets.

On peut exclure la limite inférieure 0° et imposer un angle Δγ minimum (en valeur absolue) de 0.25°, de préférence 0.5°. On pourra même privilégier une plage de variation préférentielle Δγ, entre deux sommets successifs, deux creux successifs ou entre un sommet et un creux successifs, telle que 0.25° ≤ Δγ ≤ 25°, et même telle que 0.5° ≤ Δγ ≤ 15° de façon encore plus stricte (toujours en valeur absolue).

De même pour la variation d'angle de squelette (Δβ1) au bord d'attaque ou (Δβ2) au bord de fuite, là encore entre deux sommets de dents successifs, deux creux successifs ou entre un sommet et un creux successifs.

Les angles beta1 (β1), beta 2 (β2) et de calage (γ) permettent alors, en particulier avec ces valeurs, de maitriser plus finement le triangle de vitesses de l'écoulement, c'est-à-dire l'incidence de l'écoulement au niveau du BA ou l'angle de sortie de l'écoulement au niveau du BF en fonction de la position radiale. Pour une aube de turbomachine, il est nécessaire de faire varier ces angles en fonction de la position radiale (ou de l'envergure) pour optimiser son fonctionnement aérodynamique en fonction de la vitesse de rotation et d'avancement. Cela est d'autant plus important en présence d'ondulations au niveau du BA et/ou du BF.

La présence d'ondulations au BA accélère dirige et accélère alors d'autant mieux l'écoulement vers les creux qui peuvent être exposés à une survitesse et une sur-incidence et donc un phénomène de décrochage. Ainsi, il est important d'assurer que l'angle beta1 entre un sommet et un creux, adjacents entre eux, soient différents. Le même raisonnement est valable pour l'angle de calage.

La présence d'ondulations au BF crée un écoulement croisé (« cross-flow ») et/ou des Vortex en forme de fer à cheval (« Horse-shoe vortices ») entre deux sommets de dents adjacents. Cela est dû à la surpression côté intrados qui dirige l'écoulement vers l'extrados (en sous-pression). Cet écoulement croisé augmente les pertes aérodynamiques et peut être pénalisant pour l'acoustique (car les sillages sont plus énergétiques et peuvent interagir avec des éléments à l'aval, tels qu'un stator et/ou une voilure). Ce phénomène peut être réduit en assurant que l'angle beta2 entre un profil contenant un sommet et un profil contenant un creux, adjacents entre eux, soient différents. Le même raisonnement est valable pour l'angle de calage.

A priori, toute ondulation comprendra la succession alternée d'au moins deux sommets de dents et deux creux (ou fonds).

Les termes axial, radial et circonférentiel sont définis par rapport à l'axe X du propulseur. Chaque bras de calage est le bras qui tourne autour d'un axe (l'axe de calage) s'étendant (ce peut être radialement) en travers par rapport à l'axe longitudinal central et autour duquel la pale, fixée à ce bras, pivote pour changer d'angle d'attaque du flux gazeux qui traverse l'hélice de rotor ou le stator considéré(e).

Chaque axe de calage peut traverser une pale et un bras de calage.

Par ailleurs, les termes amont (AM) et aval (AV) sont définis par rapport au sens de circulation des gaz au sein du propulseur.

Les premiers moyens d'entrainement peuvent comprendre, disposé dans la nacelle, un moteur d'entraînement en rotation autour de l'axe longitudinal central de la première série de pales et/ou la deuxième série de pales. Un moteur à turbine(s) à gaz est notamment visé. Mais, comme déjà mentionné, le moteur peut être notamment thermique (tel que turbomoteur, turboréacteur, turbosoufflante), électrique, à hydrogène, hybride (notamment thermique et/ou électrique et/ou à hydrogène).

Ledit moteur d'entraînement en rotation peut donc comprendre au moins un compresseur, une chambre de combustion et au moins une turbine à gaz et être ainsi de type turbomachine aéronautique.

Peut être prévu :
- un réducteur de vitesse de rotation de la première série de pales et/ou la deuxième série de pales autour l'axe longitudinal central ; et/ou
- une configuration tant « pusher » que « puller », et ce notamment en configuration USF.

Des organes de transmission sont typiquement interposés entre ce moteur d'entraînement en rotation et les pales.

Disposé(s) dans la nacelle, ledit moteur d'entraînement en rotation, et possiblement les organes de transmission, seront alors enfermés dans la nacelle.

D'autres caractéristiques qui peuvent compléter la solution de base ci-dessus sont présentées ci-après.

Certaines sont incluses dans ce chapitre « Présentation de l'invention », d'autres seulement dans le chapitre « Description détaillée de l'invention », afin d'éviter des répétitions.

Au titre des caractéristiques complémentaires, on peut déjà noter, concernant les (premiers) moyens d'entrainement en rotation autour de l'axe longitudinal central des pales de l'une au moins des première série de pales et deuxième série de pales :
- qu'ils pourront comprendre une turbine à gaz (autrement dit un moteur à turbine(s) à gaz), et/ou
- que ces (premiers) moyens d'entrainement, ou ce moteur, pourront comprendre un réducteur de vitesse en prise avec les pales de l'une au moins des première série de pales et deuxième série de pales, pour adapter la vitesse de rotation desdites pales autour de l'axe longitudinal central (X).

A noter à ce sujet que, sur un tel moteur à turbine(s), le réducteur de vitesse serait placé entre la (ou l'une des) turbine(s) d'entrainement des pales de la première série de pales ou de la deuxième série de pales (ou de l'arbre d'entrainement en rotation de la turbine considérée) et les pales de l'hélice concernée, pour réduire leur vitesse de rotation.

Une double turbine, axialement haute pression puis basse pression, pourra en particulier être utilisée.

Dans le cas d'un moteur à turbine(s) à gaz, on trouvera traditionnellement et successivement, le long de l'axe X, un ou plusieurs compresseur(s), une ou plusieurs chambre(s) de combustion, une ou plusieurs turbine(s) d'entrainement du ou des compresseur(s), via un ou plusieurs arbres d'entraînement axiaux, une ou plusieurs tuyères d'échappement de gaz.

En liaison avec tout ce qui précède, et notamment le cas où les pales de la première série de pales sont entraînées en rotation par ladite turbine d'entrainement via un réducteur de vitesse, un cas particulièrement intéressant pourra être celui où le doublet d'hélices amont/aval est en configuration « puller » : doublet d'hélices situées vers l'extrémité amont de la nacelle du moteur central, en amont de la chambre de combustion, ceci que l'on soit en configuration doublet d'hélices rotor/stator (rotor amont et stator aval) ou rotor/rotor (rotor amont et rotor aval).

L'un des intérêts d'un réducteur de vitesse entre la (ou des) turbine(s) et le (ou les) rotor(s) non-caréné(s) est d'améliorer les performances et donc d'optimiser le fonctionnement de chaque module du propulseur aéronautique. Par ailleurs, une configuration « puller » est compatible à la fois d'une installation du propulseur aéronautique sous aile (comme sur la plupart d'avions commerciaux) ou en arrière-corps de l'avion à l'aide d'un mât ou pylône.

Un intérêt pourra être trouvé :
- à ce que les pales de la première série de pales et de la deuxième série de pales soient disposées pour pouvoir être entraînées en rotation autour de l'axe longitudinal central (X) par la(les) turbine(s) considérée(s), et
- à ce que la turbine concernée soit adaptée à entraîner, autour de l'axe longitudinal central (X), la première série de pales à une vitesse de rotation supérieure ou égale à la vitesse de rotation de la deuxième série de pales.

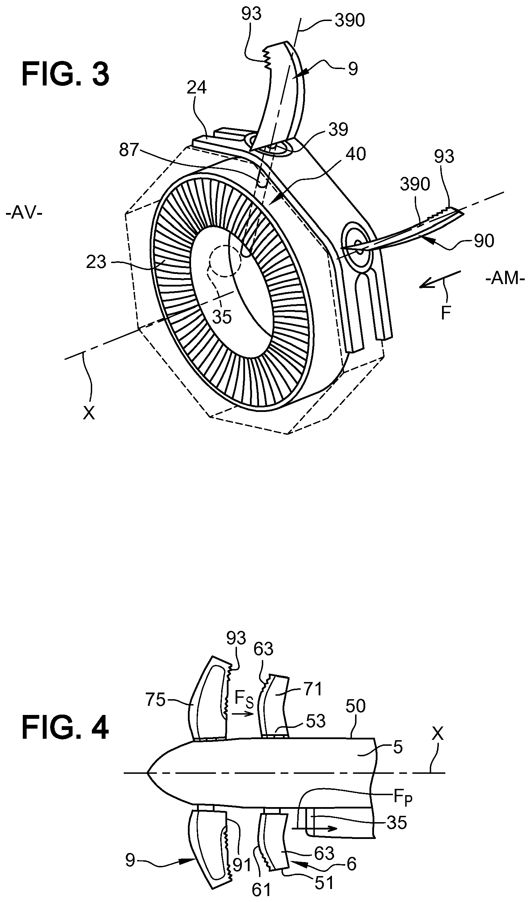

On peut aussi noter, concernant les pales, les caractéristiques ci-après a) et suivantes, à considérer indépendamment ou, en tout ou partie, en combinaison :
a) la première série de pales et la deuxième série de pales peuvent présenter des nombres de pales différents ; Ceci permet de réduire le bruit car on évite que tous les sillages de l'hélice (rotor) amont impactent simultanément l'hélice (rotor ou stator) aval et donc on permet de décorréler le rayonnement acoustiques des pales ;
b) on peut prévoir :
   - que chaque pale de la première série de pales et/ou de la deuxième série de pales présente une épaisseur maximale entre la face d'intrados et la face d'extrados, et
   - sur les pales, que l'épaisseur maximale des pales (ou entre les profils d'intrados et d'extrados qui définissent la pale considérée) se situe près du pied de pale, à une distance inférieure à 0.1x(Re - Ri) à partir de l'extrémité de connexion (souvent dénommée pied de pale); ceci permet de favoriser la tenue mécanique des pales en fonctionnement nominal, ainsi qu'en cas d'ingestion d'oiseaux. Les efforts mécaniques sur les pales présentant des ondulations de BA/BF pourraient être supérieurs au cas nominal avec des BA/BF lisses. Dans ce cas, la présente caractéristique serait nécessaire afin d'améliorer la tenue mécanique des pales présentant des ondulations ; On aura alors privilégié une valeur minimale de l'épaisseur de la pale à l'encastrement dictée par des raisons mécaniques davantage que par des raisons aéro-acoustiques ;
c) chaque pale de la première série de pales et/ou de la deuxième série de pales présente un rapport Ri/Re de moyeu-à-extrémité libre tel que Ri/Re est compris entre 0.10 et 0.50 ; Un rapport de moyeu qui varie dans cette plage permet de garantir un bon compromis entre les besoins aérodynamiques (pales grandes donc Ri/Re faible) et les besoins d'intégration des systèmes dans le moyeu (PCM, canalisations d'huile, ...etc, d'où Ri/Re grand) ;
d) on peut prévoir :
   - que les pales de la première série de pales et/ou de la deuxième série de pales sont situées sur une ligne fermée centrée sur l'axe longitudinal central et ayant un diamètre D,
   - que les axes de calage ou les bras de calage des pales de la première série de pales et de la deuxième série de pales sont axialement séparés, par paire, d'une distance S, et
   - que le rapport S/D est compris entre 0.005 et 1, et de préférence entre 0.15 et 0.70 ;
   Augmenter l'espacement axial entre les hélices (rotor ou stator) amont et aval permet de réduire le bruit dans la plupart des cas, ceci grâce à la dissipation du sillage turbulent de l'hélice amont lors de sa propagation vers l'aval. Ainsi, les sillages qui arrivent au bord d'attaque de l'hélice (rotor ou stator) aval sont moins énergétiques ; mais trop augmenter cette distance entre les hélices pourrait poser des problèmes de masse (turbomachine plus longue dans la direction axiale) et d'intégration de la turbomachine dans l'avion plus complexe. Par ailleurs, le bord de fuite de chacune des pales de la première série de pales est situé longitudinalement en amont d'un bord d'attaque de chacune des pales de la deuxième série de pales. Ainsi, on évite des interférences entre les séries de pales.
e) un "clipping", viz. une situation où l'envergure L (ou Re - Ri) des pales de l'hélice (rotor) amont est supérieure à celle des pales de l'hélice aval (rotor ou stator), cette distance étant ici mesurée suivant l'axe de calage, pourra être profitable. Un "clipping" (comme figure 4 ci-après) permet de réduire le bruit, car en réduisant l'envergure de l'hélice (rotor ou stator) aval on peut éviter l'impact du tourbillon de bout de pale de l'hélice (rotor) amont, qui est très énergétique. D'un point de vue aérodynamique, le "clipping" peut toutefois avoir un impact négatif, car une partie de la giration de l'écoulement produit par l'hélice amont n'est pas récupéré par l'hélice aval, notamment en partie haute.
   Autrement dit, on pourra alors prévoir :
   - que les pales de la première série de pales soient disposées pour pouvoir être entraînées en rotation autour de l'axe longitudinal central par ladite turbine d'entrainement de la série ou des deux séries de pales précitée(s), et
   - que la distance Re - Ri, mesurée à partir de l'extrémité de connexion, des pales de la première série de pales soit supérieure à celle d'au moins l'une des pales des pales de la deuxième série de pales.
f) le diamètre maximum (2xRe) de l'hélice (amont ou aval) est compris entre 1m et 6m. Autrement dit, le diamètre des pales de la première série de pales et des pales de la deuxième série de pales seront alors respectivement inscrites sur un premier cercle et un deuxième cercle, chacun de circonférence comprise entre 1m et 6m.

Comme ci-avant il s'agit d'un compromis à trouver, en particulier en liaison avec la solidité, le poids, et le bruit.

A noter aussi que, sur une zone de bord d'attaque ou de bord de fuite présentant des ondulations, une variation d'angle de squelette (Δβ1 ci-après) au bord d'attaque ou (Δβ2 ci-après) au bord de fuite, entre un sommet de dent et un creux (ou fonds) de dent, adjacents entre eux, suivant l'envergure d'une pale, ou radialement à l'axe longitudinal central (X), pourra favorablement être supérieure à 0° et inférieure à 45°, voire dans certains cas à 30°. On évite ainsi les cas de profils ondulés isolés.

En effet, il s'est avéré :
- que l'angle d'attaque de l'air perçue par le(s) profil(s) de pale(s) au niveau des creux et au niveau des sommets des ondulations de BA est alors convenable, et/ou
- qu'il n'y a pas de phénomènes de décrochage pénalisants pour les performances de la (des) pale(s).

D'autres considérations de nature comparable peuvent être utilement à privilégier, à savoir l'une au moins des sept considérations suivantes :
g) une variation d'angle de calage (Δγ) de pale entre un profil contenant un sommet de dent et un profil contenant un creux de dent, adjacents entre eux,
   -- suivant l'envergure (L) de la pale, ou
   -- radialement à l'axe longitudinal central (X),
est inférieure à 45°, et de préférence supérieure à 0°; et/ou,
h) une variation d'angle de calage (Δγ) de pale entre deux profils contenant des sommets de dents et/ou entre deux profils contenant des creux de dents, respectivement adjacents entre eux (de sommet à creux et/ou de creux à sommet, dans un sens donné le long des ondulations),
   -- suivant l'envergure (L) de la pale, ou
   -- radialement à l'axe longitudinal central (X),
est inférieure à 45°, et de préférence supérieure à 0°; et/ou,
i) sur une zone de bord d'attaque ou de bord de fuite d'une pale présentant des ondulations, une variation d'angle de squelette (Δβ1) au bord d'attaque ou (Δβ2) au bord de fuite, entre deux sommets de dents et/ou deux creux de dents, respectivement adjacents entre eux,
   -- suivant l'envergure (L) de la pale, ou
   -- radialement à l'axe longitudinal central (X),
est inférieure à 45°, et de préférence supérieure à 0°; et/ou,
j) sur une zone de bord d'attaque ou de bord de fuite d'une pale présentant des ondulations, une variation d'angle de squelette (Δβ1) au bord d'attaque ou (Δβ2) au bord de fuite, entre deux profils adjacents contenant des sommets de dents et/ou entre deux profils contenant des creux de dents, adjacents entre eux,
   -- suivant l'envergure (L) de la pale, ou
   -- radialement à l'axe longitudinal central (X),
est inférieure à 45°, et de préférence supérieure à 0 ; et/ou,
k) au moins l'une des pales de l'une des hélices présente une flèche la plus grande à une position radiale située sur une longueur radiale de 0.4x(Re-Ri) de ladite extrémité libre de la pale considérée (cette considération est de préférence pour les pales de l'hélice amont, mais elle serait valable également pour les pales de l'hélice aval) ; et/ou,
l) au moins l'une des pales de la série de pales aval présente un rayon Re plus grand au bord d'attaque qu'au bord de fuite, lorsque les lignes de bord d'attaque et de bord de fuite ne sont pas confondues, et/ou au moins l'une des pales de la première série de pales présente un rayon Re plus petit (de préférence) ou plus grand au bord d'attaque qu'au bord de fuite, lorsque les lignes de bord d'attaque et de bord de fuite ne sont pas confondues.

A noter encore un intérêt à ce qui suit, en liaison avec un aspect acoustique et/ou d'envergure de pales, notamment celle l'hélice aval (comme expliqué plus en détails plus loin dans le texte) :
m) - la nacelle présentera une entrée d'air, cet air pouvant utilement être destiné au moteur et définir (une partie au moins) du flux d'air primaire alimentant ce moteur, s'il s'agit d'une turbomachine à gaz, et
- sur la nacelle, ladite entrée d'air sera située alors axialement entre les axes de calage des pales de la première série de pales et de la deuxième série de pales ;
voire, possiblement :
n) sur la nacelle, l'entrée d'air présentera un bec situé à un rayon « Rb » de l'axe longitudinal central (X), et lesdites ondulations de bord de fuite de la première série de pales seront alors situées au niveau dudit rayon Rb.

Notamment dans le cas m), c'est donc ainsi que pourra utilement être définie, sur la paroi circonférentielle de la nacelle, en aval de la première série de pales, l'entrée (ou une entrée) d'air, laquelle entrée d'air pourra donc, dans le cas d'une turbomachine, traverser la turbine et servir d'entrée d'air primaire à un tel moteur.

### Brève description des figures

[Fig. 1] illustre un avion propulsé par des moteurs à soufflantes non carénées de type hélice qui peuvent utiliser l'invention,
[Fig. 2] illustre un système de turbine à entraînement direct qui peut entraîner les hélices de la figure 1
[Fig. 3] illustre un anneau polygonal qui entoure un étage de turbine et supporte les pales de l'hélice (ou rotor), en liaison avec la figure 2,
[Fig. 4] est une vue de côté d'une partie d'un propulseur conforme à l'invention, suivant une forme de réalisation,
[Fig. 5] est une vue de côté d'une partie d'un propulseur conforme à l'invention, suivant une autre forme de réalisation,
[Fig. 6] est une vue de côté d'une partie d'un propulseur conforme à l'invention, suivant une autre forme de réalisation, mais avec l'entrée d'air du flux primaire située entre l'hélice amont et l'hélice aval, comme dans la réalisation de la figure 5,
[Fig. 7] est une vue de côté d'une partie d'un propulseur conforme à l'invention, suivant une autre forme de réalisation,
[Fig. 8] est une vue schématique d'une partie d'un pied de pale pale et son environnement, conformément à une possibilité de réalisation, dans le cas d'une pale de stator à calage variable, vue en coupe parallèle à l'axe du moteur, montée dans la nacelle, précisément dans le carter de la nacelle,
[Fig. 9] est une vue en coupe d'une pale conforme à l'invention, selon une forme possible de réalisation,
[Fig. 10] schématise de face une configuration possible de certaines pales de stator,
[Fig. 11] schématise une possible évolution de plusieurs sources de bruit sur un spectre sonore SPL (« Sound Pressure Level » en dB) en fonction de la fréquence f (en Hz), pour une configuration CROR, avec donc deux hélices, respectivement amont et aval, contrarotatives,
[Fig. 12] schématise une possible évolution plusieurs sources de bruit sur un spectre sonore SPL (« Sound Pressure Level » en dB) en fonction de la fréquence (en Hz), pour une configuration USF, avec donc une hélice amont rotor et une hélice aval stator,
[Fig. 13]
[Fig. 14]
[Fig. 15]
[Fig. 16]
[Fig. 17]
[Fig. 18]
[Fig. 19]
[Fig. 20]
[Fig. 21]
[Fig. 22]
[Fig. 23]
[Fig. 24]

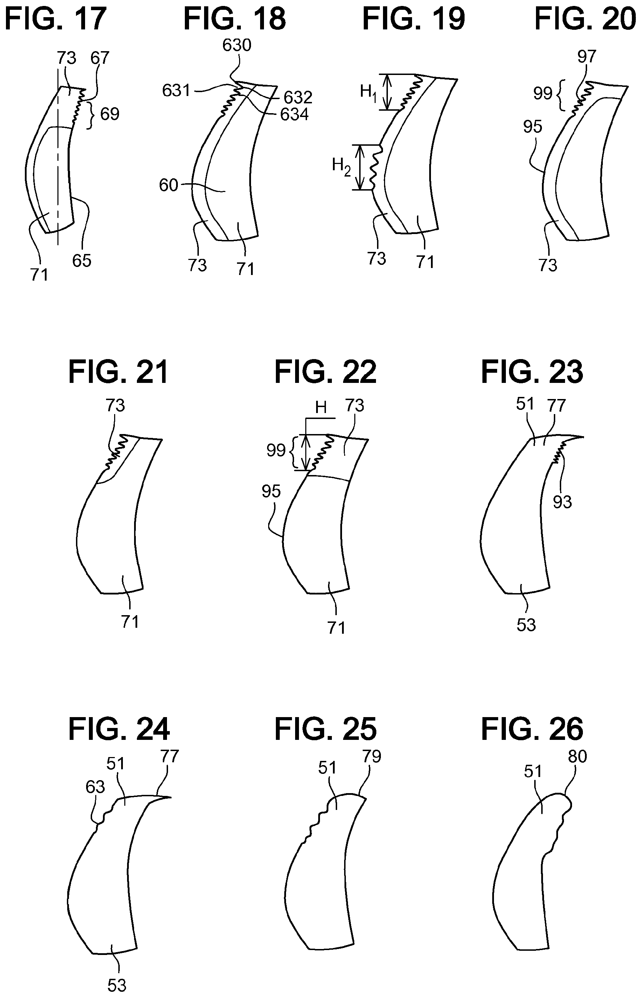

[Fig. 25] et
[Fig. 26] schématisent en vue de côté une pale conforme à l'invention, selon plusieurs formes possible de réalisation,

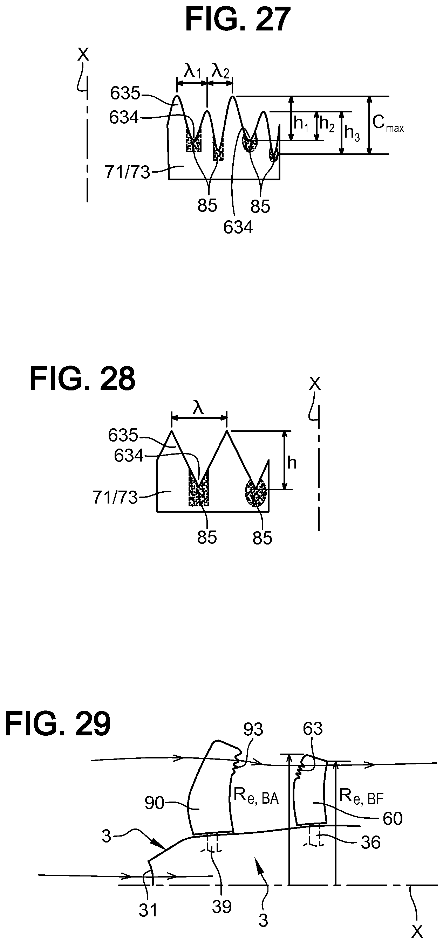

[Fig. 27] et
[Fig. 28] schématisent en vue de côté une surface extérieure locale de pale (au BF ou BA) conforme à l'invention, selon deux formes possible d'ondulations et de réalisation du corps de la pale (avec présence de zones en mousse amortissante acoustiquement ou en surface poreuse),
[Fig. 29] est une vue de côté d'une partie d'un propulseur conforme à l'invention, suivant une autre forme de réalisation,

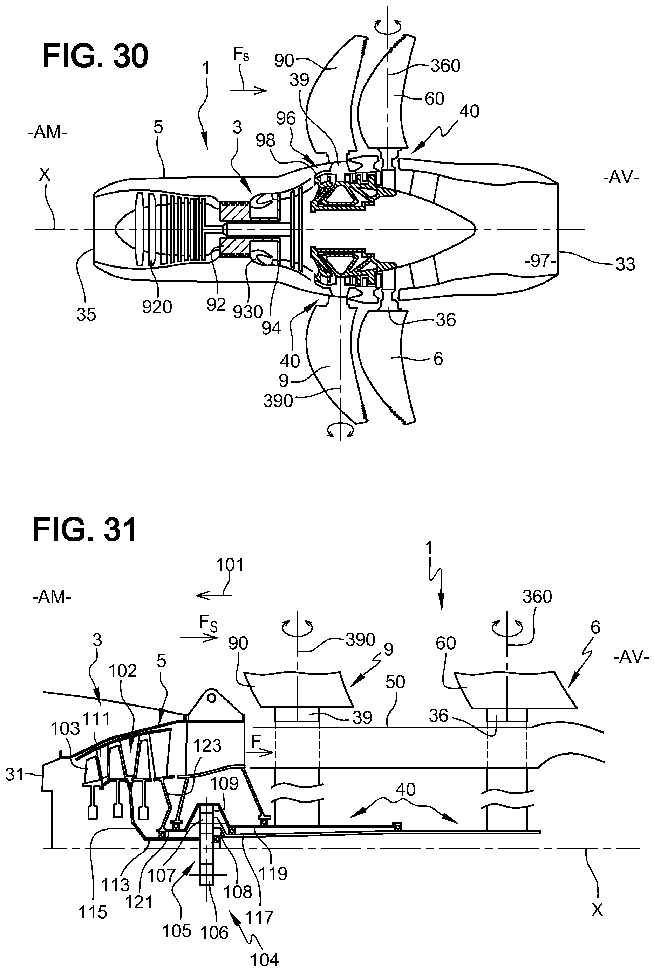

[Fig. 30] illustre une coupe transversale longitudinale schématique à travers une hélice contrarotative à double flux, d'un moteur à turbine à gaz utilisant l'invention,
[Fig. 31] illustre une vue agrandie d'un système d'hélices contrarotatives équipant une turbomachine utilisant l'invention,

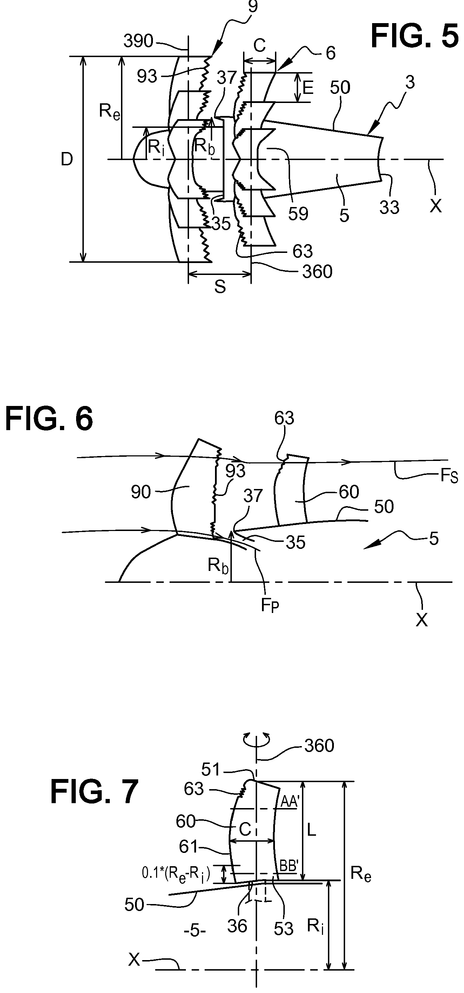

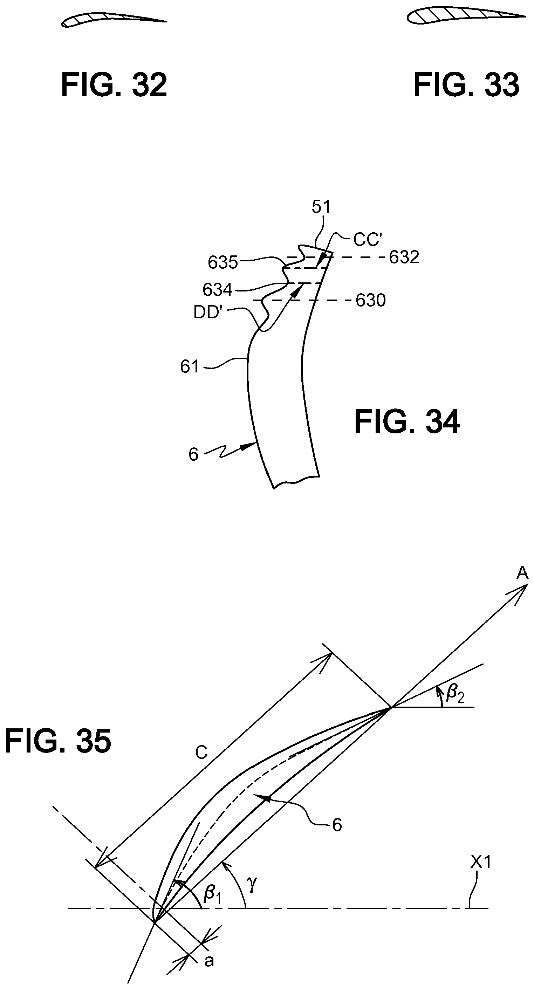

[Fig. 32] illustre la coupe AA' de la figure 7
[Fig. 33] illustre la coupe BB' de la figure 7
[Fig. 34] et
[Fig. 35] illustrent les angles caractéristiques d'un profil (voir Fig. 35 qui correspond à la coupe CC' ou DD' de la figure 34),

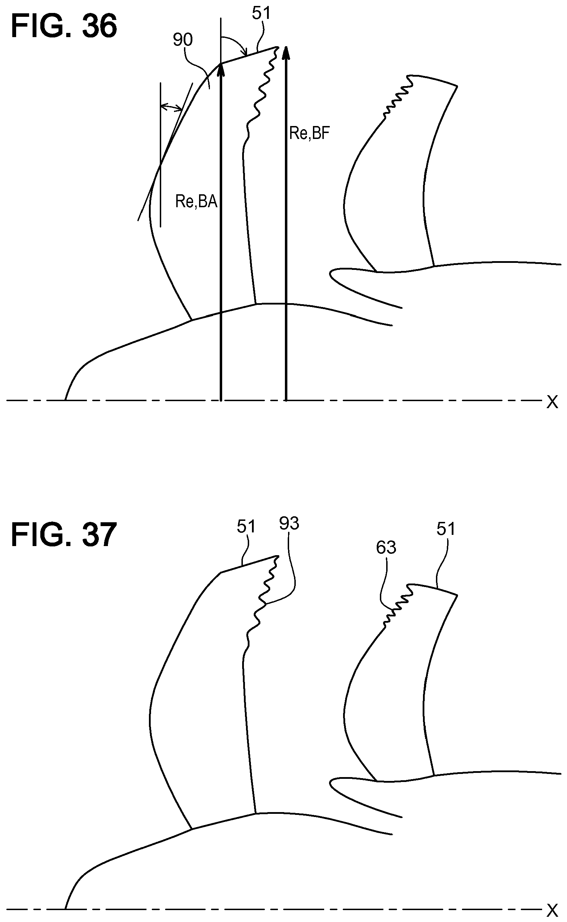

[Fig. 36], et
[Fig. 37] illustrent d'autres variantes de configuration de pales, et

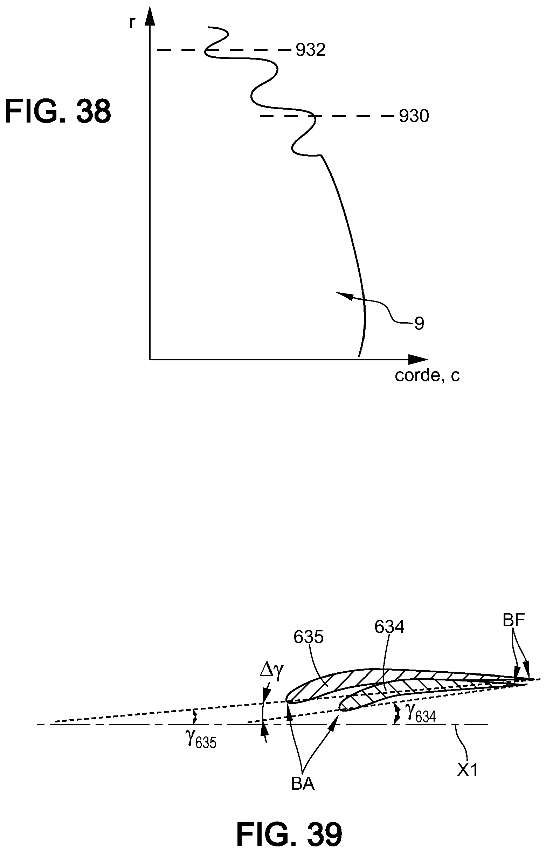

[Fig. 38] illustre des ondulations en BF, sur l'envergure,
[Fig. 39] illustre un exemple figurant Δγ entre un sommet et un creux de dents, adjacents entre eux,

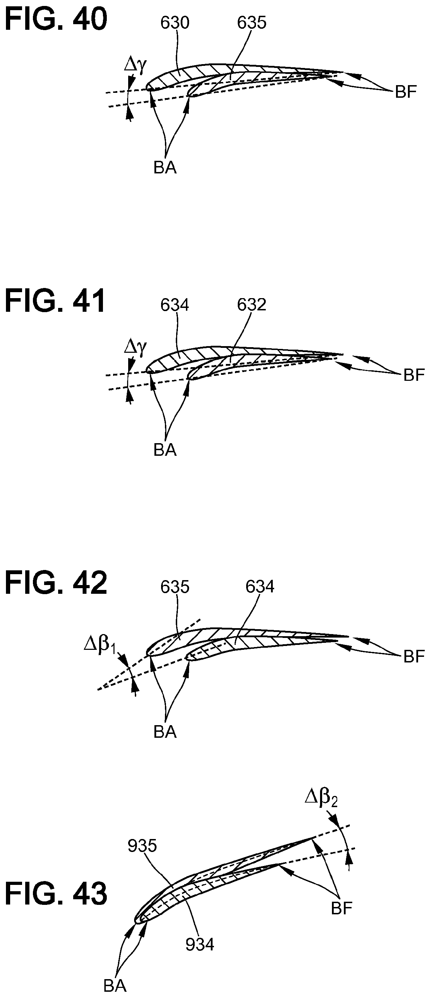

[Fig. 40] illustre un exemple figurant Δγ entre deux sommets successifs de dents,
[Fig. 41] illustre un exemple figurant Δγ entre deux creux successifs de dents,
[Fig. 42] illustre un exemple de variation d'angle de squelette (Δβ1) au bord d'attaque, entre un sommet et un creux de dents, successifs, donc adjacents entre eux; mais ce pourrait être deux sommets successifs ou deux creux successifs de dents,
idem pour [Fig. 43] où l'angle de squelette (Δβ2) est toutefois au bord de fuite.

### Description détaillée de l'invention

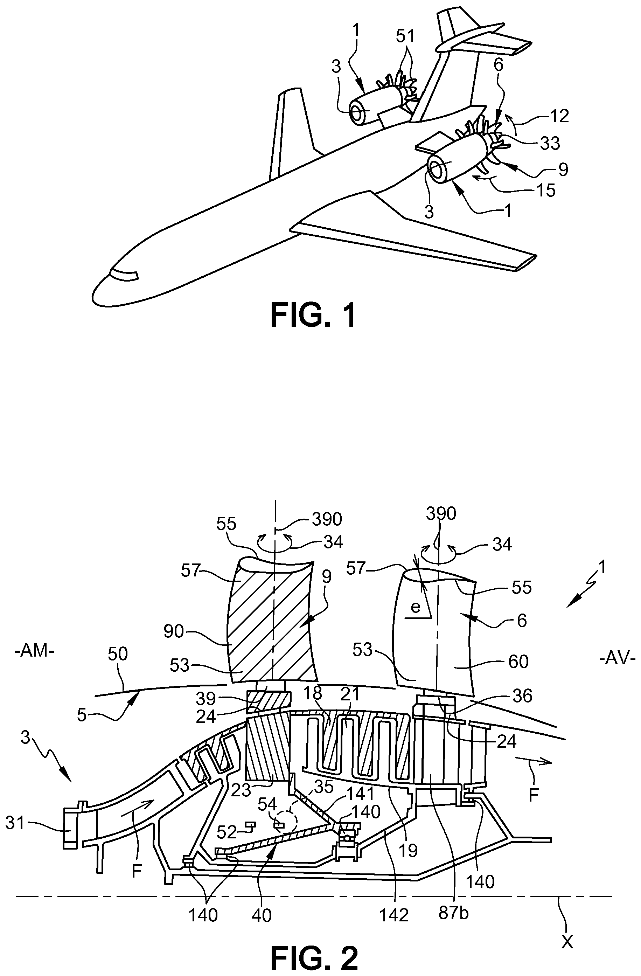

Notamment les figures 1 et 2 illustrent schématiquement un propulseur 1 aéronautique, en particulier un turboréacteur d'avion à double flux et à hélices non-carénées, selon une forme de réalisation de l'invention. Le propulseur 1 s'étend selon un axe X.

Dans ce qui suit, quand les moyens de propulsion du propulseur 1 sont évoqués, il est fait référence à une turbomachine, donc à un propulseur à turbine(s) à gaz. Ceci ne doit toutefois pas être considéré comme limitatif, comme déjà mentionné.

Ainsi, la figure 1 illustre un avion propulsé par au moins un (par exemple deux) propulseur aéronautique 1, le ou chaque propulseur aéronautique 1 comprenant :
- un moteur, que l'on peut appeler central, 3 présentant un axe longitudinal central X (pouvant être parallèle à l'axe longitudinal de l'avion), le long duquel un écoulement gazeux peut circuler d'amont (AM) vers l'aval (AV),
- une première série de pales 9, que l'on peut considérer comme définissant une hélice,
- une deuxième série de pales 6 positionnées à l'aval de la première série de pales et que l'on peut aussi considérer comme définissant une hélice.

A noter que le parallélisme entre l'axe longitudinal central X et l'axe longitudinal de l'avion cela n'est pas condition nécessaire pour la mise en œuvre de l'invention. L'axe central de la turbomachine peut présenter un angle non nul par rapport à l'axe de l'avion (« cant angle » en anglais) afin de minimiser les effets d'installation.

Le moteur central 3 est enfermé dans la nacelle 5 qui l'entoure circonférentiellement.

Conformément à une configuration CROR, les hélices 6 et 9 sont, dans l'exemple de la figure 2, toutes deux des rotors et sont contrarotatives : Elles tournent dans des directions opposées, autour de l'axe commun X.

Elles peuvent être du type à soufflante(s) haut débit et à rotor(s) non-caréné(s) dits aussi à hélices non carénées (open rotor / ultra-high bypass ratio, unducted fan type). Les sens de rotation sont indiqués par les flèches 12 et 15.

La solution de la figure 1 pourrait aussi convenir à une turbomachine à hélices amont 9 et aval 6 non-carénées type USF (Unducted Single Fan), où l'hélice aval 6 ne tourne pas autour de l'axe de la turbomachine X. Autrement dit, l'hélice aval 6 est un redresseur ou stator. On obtiendrait ce cas par exemple en supprimant le bras 19 mentionné ci-après. La figure 2 illustre un type de système de turbine qui peut être utilisé pour entraîner la rotation de l'une au moins des hélices 6 et/ou 9 autour de l'axe de la turbomachine X et le calage de l'une au moins de ces mêmes hélices 6 et/ou 9 autour de leurs axes respectifs 360, 390.

Sur la figure 2, l'hélice avant ou l'hélice amont 9 (hachurée) est attachée à une première turbine 18 (également hachurée) qui tourne dans le sens 15 comme indiqué dans la figure 1. L'hélice arrière ou hélice aval 6 est attachée, par le bras 19, à une deuxième turbine 21 et tourne dans la direction 12 de la figure 1. Un flux de gaz traverse les turbines 18 et 21. L'entrée d'air du flux d'air F destiné au système de turbine est située à l'extrémité amont du moteur central 3, et repérée 31. Les roulements 140 supportent les turbines et permettent la rotation. Le flux de gaz chaud et à haute énergie F est fourni par une chambre de combustion (non illustrée) et provoque la rotation des turbines. Les roulements 140 supportent un cadre tournant 141 fixé avec les aubes de l'étage de turbine 23.

Les pales 60 et 90 d'hélice (qui sont parfois appelées pales de soufflantes, soufflantes à hélice ou pales d'hélice car elles présentent des caractéristiques hybrides entre hélices et soufflantes) sont de type à pas variable. Le pas variable signifie que chaque pale, telles donc que respectivement 60 et 90, peut tourner autour d'un axe de pas (ou axe de calage) respectif 360, 390, comme indiqué par les flèches circulaires 34. La principale raison de changer le pas est de donner aux pales l'angle d'attaque qui est approprié dans les conditions de vol de l'avion et le réglage de la puissance du moteur. En outre, il est ainsi possible d'adopter une configuration tant "puller" (tracteur : hélices à l'amont de la chambre de combustion, comme figure 4 ou 5) que "pusher" (pousseur : hélices à l'aval de la chambre de combustion, comme figure 1), avec donc des hélices non carénées sur une turbomachine type CROR (donc deux hélices amont 9 et aval 6 contrarotatives) et/ou type USF (avec donc une hélice amont 9 rotor et une hélice aval 6 stator), la figure 2 pouvant se rapporter a priori à un cas "pusher". On pourrait appliquer cette solution à un cas « puller », en décalant les hélices 9,6 vers l'amont de la nacelle, donc en amont de la chambre de combustion) ; typiquement au niveau du(ou des) compresseur(s).

La source de puissance motrice qui provoque le changement de pas est généralement située à l'intérieur du parcours annulaire des turbines 18 et 21, comme dans la région 35 de la figure 2. Par conséquent, un mécanisme est nécessaire pour transporter le couple mécanique de la région 35, à travers la veine d'écoulement du flux (flux Fs dans l'exemple), vers les pales 60 et 90. De tels moyens (dits seconds moyens) d'entrainement 40 pour faire pivoter, autour de son axe de calage 360, 390, chaque pale concernée via le bras de calage 36 ou 39 auquel elle est fixée peuvent être organisés comme suit : Les pales de l'hélice considérée peuvent être portées par un support annulaire 24, tel qu'une virole ou anneau polygonal entourant l'étage de turbine considéré (23 sur la coupe de la figure 2) qui est représenté en coupe schématique à la figure 2, l'étage de turbine étant aussi visible sur la figure 3. Le support annulaire 24 supporte donc les pales 90 de l'hélice 9, sur la coupe. Pour chaque pale d'open rotor, un arbre radial 87 traverse une aube de turbine (arbre radial 87 et étage 23 figures 2 et 3). L'arbre 87 est prolongé radialement par un bras 39 de calage de la pale fixé à son pied. Le changement de pas indiquée par les flèches 34 peut être causée par une rotation entre engrenages, via des sous-planètes d'un engrenage à planétaire composé fixées à un arbre d'entrainement. Si le rapport de transmission entre les sous-planètes et une couronne fixe 54 est différent du rapport de transmission entre lesdites sous-planètes et une couronne mobile 52 (c'est-à-dire que le système est un système planétaire différentiel), alors la rotation du planétaire composé pourra provoquer une rotation relative des couronnes 52et 54, et ainsi entrainer le changement de pas 34. On peut utiliser la même solution pour le calage de l'hélice aval 6 : Un deuxième cadre 142, tournant autour de l'axe X et fixé avec les aubes d'un étage de turbine aval situé au niveau du rotor aval 6 peut être couplé à un cadre 141 tournant aussi autour de l'axe X et fixé avec les aubes de l'étage de turbine amont 23. Les deux cadres 141, 142 sont supportés par des roulements 140. En outre le principe de la figure 3 expliqué ci-avant peut être appliqué : Pour chaque pale d'open rotor 6, un arbre radial 87b identique à celui 87 peut traverser un anneau polygonal entourant une aube dudit étage de turbine aval. Dans tous les cas ici visés, si le moteur central 3 est un turboréacteur, il comprend donc successivement, le long de l'axe X, un ou plusieurs compresseur(s), une (ou des) chambre(s) de combustion, une ou plusieurs turbine(s) d'entrainement du ou des compresseur(s), via un ou plusieurs arbres d'entraînement axiaux, et au moins une sortie de gaz chauds ou tuyère à l'aval, 33.

Dans une configuration "puller", comme figure 4, outre le cas d'hélices amont 9 et aval 6 formant deux rotors, l'hélice amont 9 peut être seule un rotor, et l'hélice aval 6 un stator.

Le stator comprend alors des pales 60 de redresseur, pour redresser une partie du flux Fs, précisément un flux d'air secondaire Fs qui traverse les deux hélices, dans le cas d'un moteur central 3 de type turboréacteur présentant une zone d'écoulement d'un tel flux d'air secondaire Fs, entourant une veine de flux de gaz primaire Fp.

Dans la configuration "puller", l'entrée d'air 35 destiné au flux primaire Fp de gaz passant dans le moteur central 3 peut être en aval des deux hélices amont 9 et aval 6, comme figure 4.

Une solution pertinente est toutefois de situer axialement l'entrée d'air 35 entre les deux hélices amont 9 et aval 6, comme figure 5 ou 6. Cet implantation peut en particulier être entre les axes de calage respectifs 390,360 des pales de la première série de pales 9 et de la deuxième série de pales 6.

La nacelle 5, qui peut renfermer le moteur central 3, présente, autour de l'axe X, une paroi circonférentielle à surface externe aérodynamique 50 par rapport à laquelle la première série de pales 9 et la deuxième série de pales 6 font saillie, radialement (ou plus généralement transversalement) à l'axe longitudinal central X.

Chaque pale 90,60 de la première série de pales 9 et de la deuxième série de pales 6 présente une face d'intrados 55 et une face d'extrados 57 (voir notamment figures 1-2) et, suivant cette direction radiale (ou donc plus généralement transversale) :
- une extrémité libre 51 opposée à une extrémité de connexion 53 formant un pied de pale proche de la nacelle 5,
- une corde C située à un rayon radial défini, centré sur l'axe longitudinal central X (voir par exemple figure 5),
- un rayon Ri entre l'axe longitudinal central X et un emplacement qui vient de niveau avec la surface externe 50 de la nacelle, cet emplacement étant situé :
   -- sur la pale (en pied de pale) ou
   -- sur un bras 39 de calage de la pale,
- un rayon Re entre l'axe longitudinal central X et un emplacement sur l'extrémité libre 51 de la pale le plus éloigné de l'axe longitudinal central X, suivant une direction transversale à l'axe longitudinal central X, et
- une envergure L (voir par exemple figure 7) définie comme Re - Ri, qui correspond à une distance entre l'extrémité libre 51 et l'extrémité de connexion 53, suivant ladite direction transversale.

A noter que cet emplacement sur l'extrémité libre 51 de la pale peut être situé sur l'axe 390 ou 360 de calage de ladite pale, ou non.

La corde C peut varier dans la direction de la pale radiale à l'axe longitudinal central X.

Avant de détailler cela et d'autres aspects ci-après, il est important de rappeler qu'un élément au cœur de l'invention est, en combinaison, sur le propulseur 1 proposé et comme existant sur toutes les figures (même si non repéré) :
- que l'une au moins des pales de la première série de pales 9 présente un bord de fuite 91 présentant des ondulations 93, et,
- que l'une au moins des pales de la deuxième série de pales 60 présente un bord d'attaque (BA) 61 présentant des ondulations 63,et
- que certaines au moins des pales 90 de la première série de pales 9 sont à calage variable, de sorte que chacune d'elles peuvent pivoter autour d'un bras de calage 39 auquel la pale 90 concernée est fixée, autour de l'axe de calage 390 qui traverse au moins partiellement ladite pale 90, et/ou
- que certaines au moins des pales 60 de la deuxième série de pales 6 sont à calage variable, de sorte chacune d'elles peuvent pivoter autour d'un bras de calage 36 auquel la pale 60 concernée est fixée, autour de l'axe de calage 360 qui traverse la pale 60.

Une succession alternée d'au moins deux sommets de dents et deux creux, tels que par exemple repérés respectivement 630,631 et 632,634 dans la figure18, définit une zone ondulée le long du BA ou du BF.

De préférence, le nombre de sommets et/ou de creux variera de préférence entre 2 et 100 le long de l'envergure L.

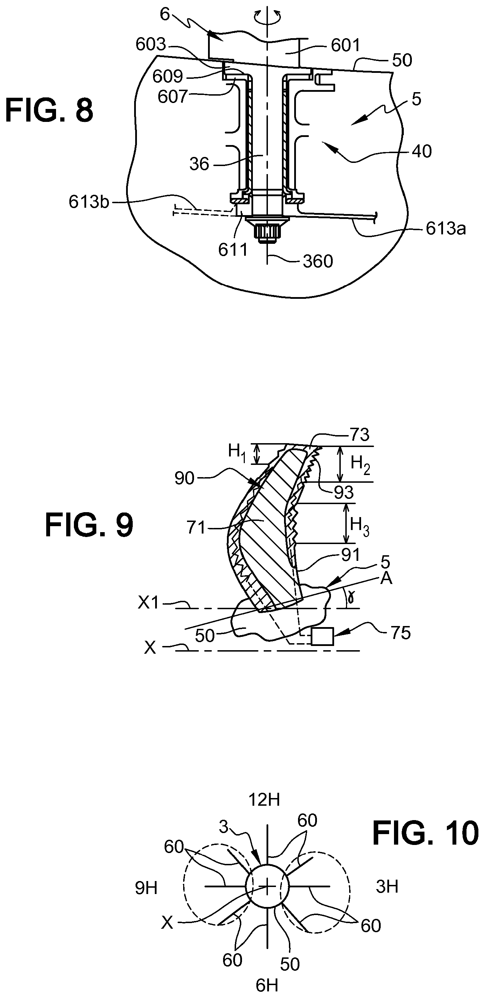

On a symbolisé par « γ » l'angle de calage de pale 9 ou 6, sur les figures 9 et 35. Le calage des profils qui définissent une pale peut donc varier en fonction du rayon de la pale. Toutefois, il est possible de définir un angle de calage γ de référence pour une pale à un rayon donné, par exemple à 75% du rayon Re.

Concernant les angles caractéristiques d'un profil (par exemple en section AA' ou BB' sur la figure 7 ou encore section CC' ou DD' sur la figure 34), on notera aussi (voir figure 35) l'intérêt à appliquer aux pales 9,6 certaines spécificités, en liaison avec tout ou partie de ce qui suit, étant précisé que, conformément aux conventions habituelles :
- l'angle de calage (γ) de la pale considérée est défini entre la ligne ou droite A qui relie le bord d'attaque et le bord de fuite de la pale considérée (à un rayon donné) et la ligne X1 parallèle à l'axe longitudinal central X (« γ » définit ainsi l'angle entre une parallèle (X1) à l'axe longitudinal central X passant par le BA de la pale),
- l'angle du squelette au BA (β1) considéré est défini entre :
   -- une ligne tangente à la ligne de squelette, mesurée à une distance « a » proche du BA, soit a/C < 0.2 et de préférence a/C < 0.1 (« a » étant la longueur, sur la droite A, entre le BA et un point le long la corde C), et
   -- une ligne parallèle à l'axe longitudinal central, X
- l'angle du squelette au BF (β2) considéré est défini entre :
   -- une ligne tangente à la ligne de squelette, mesurée à une distance proche du BF, telle que a/C > 0.8 et de préférence a/C > 0.9, et
   -- une ligne parallèle à l'axe longitudinal central, X ;
- la ligne de squelette est définie comme la ligne de cambrure moyenne, en pointillés, à mi-distance entre l'intrados et l'extrados du profil de la pale 9 ou 6.

Il convient de noter que les angles, γ, β1, β2 varient dans la direction radiale à l'axe longitudinal central X, c'est-à-dire, que ces angles dépendent des profils de pale à une position radiale (r) donnée ou suivant une ligne de courant/frottement de l'air à proximité de la surface des pales 90,60.

Les angles β1, β2 permettent de caractériser l'angle d'incidence et de sortie de l'écoulement à l'amont et à l'aval du profil de la pale. Ainsi, il faut s'assurer que l'incidence (ou angle d'attaque) perçue par le(s) profil(s) de pale(s) au niveau des creux (tels que 632,634 figure 18 ou 634 figure 27) et au niveau des sommets (tels que 630,631 figure 18 ou 635 figure 27) des ondulations de BA sont acceptables, et qu'il n'y a pas de phénomènes de décrochage pénalisants pour les performances des pales.

A cette fin, il est proposé que, sur les zones de BA (ou de BF) des pales 90,60 présentant des ondulations 93 et/ou 63, la variation de l'angle du squelette au BA, Δβ1, (ou au BF, Δβ2) entre un sommet 635 de dent et un creux 634 de dent, adjacents entre eux, suivant l'envergure L de la pale considérée 90 ou 60, ou dans la direction radiale à l'axe X, est inférieure à 45°, et de préférence inférieure à 25°, dans un mode de réalisation alternatif ou privilégié.

A noter aussi que, sur une zone de bord d'attaque ou de bord de fuite présentant des ondulations, une variation d'angle de squelette (Δβ1 ci-après) au bord d'attaque ou (Δβ2 ci-après) au bord de fuite, entre un sommet de dent et un creux (ou fonds) de dent, adjacents entre eux, suivant l'envergure d'une pale, ou radialement à l'axe longitudinal central (X), pourra favorablement être supérieure à 0° et inférieure à 45°, voire dans certains cas à 30°. On évitera ainsi des cas de profils isolés.

En effet, il s'est avéré :
- que l'angle d'attaque de l'air perçue par le(s) profil(s) de pale(s) au niveau des creux et au niveau des sommets des ondulations de BA est alors convenable, et/ou
- qu'il n'y a pas de phénomènes de décrochage pénalisants pour les performances de la (des) pale(s).

D'autres considérations de nature comparable peuvent être utilement inviter à privilégier l'une au moins des considérations suivantes :
i) une variation d'angle de calage (Δγ) inférieure à 45°, et de préférence supérieure à 0°, entre (un profil contenant) un sommet de dent et (un profil contenant) un creux de dent, adjacents entre eux, ceci
   -- suivant l'envergure (L) de la pale 9 ou 6, ou
   -- radialement à l'axe longitudinal central (X), et/ou,
ii) sur une zone de bord d'attaque ou de bord de fuite d'une pale 9 ou 6 présentant des ondulations, une variation d'angle de squelette (Δβ1) au bord d'attaque ou (Δβ2) au bord de fuite inférieure à 45°, et de préférence supérieure à 0°, entre deux sommets de dents adjacents entre eux et/ou entre deux creux de dents, respectivement adjacents entre eux (de sommet à sommet et/ou de creux à creux), ceci
   -- suivant l'envergure (L) de la pale, ou
   -- radialement à l'axe longitudinal central (X), et/ou,
iii) une variation d'angle de calage (Δγ) inférieure à 45°, et de préférence supérieure à 0°, entre deux (profils contenant des) sommets de dents adjacents entre eux, ceci
   -- suivant l'envergure (L) de la pale 9 ou 6, ou
   -- radialement à l'axe longitudinal central (X), et/ou,
iiii) une variation d'angle de calage (Δγ) inférieure à 45°, et de préférence supérieure à 0°, entre deux (profils contenant des) creux de dents adjacents entre eux, ceci
   -- suivant l'envergure (L) de la pale 9 ou 6, ou
   -- radialement à l'axe longitudinal central (X), et/ou
iiiii) sur une zone de bord d'attaque ou de bord de fuite d'une pale 9 ou 6 présentant des ondulations, une variation d'angle de squelette (Δβ1) au bord d'attaque ou (Δβ2) au bord de fuite inférieure à 45°, et de préférence supérieure à 0° (en valeur absolue), entre (un profil contenant) un sommet de dent et (un profil contenant) un creux de dent, adjacents entre eux, ceci
   -- suivant l'envergure (L) de la pale 9 ou 6, ou
   -- radialement à l'axe longitudinal central (X).

Les figures 42 et 43 illustrent cela, avec les sommets 935,635 de dents et creux 934,634, de dents, donc sur des exemples de pales respectivement 9 et 6, les sommets 935 et creux 934 de dents étant adjacents entre eux.

Afin de réduire le bruit, il est en outre proposé :
- que la première série de pales 9 et la deuxième série de pales 6 puissent présenter des nombres de pales différents, comme par exemple montré figure 1, de préférence chacune comprises entre 5 et 20 ; ceci pouvant permettre de décorréler le rayonnement acoustiques des pales amont et aval, et/ou
- que les pales de la première série de pales 9 et/ou de la deuxième série de pales 6 soient situées sur une ligne fermée centrée sur l'axe longitudinal central X et ayant un diamètre D, avec
- les axes de calage des pales 390, 360 respectivement de la première série de pales 9 et de la deuxième série de pales 6 qui seront axialement séparés, par paire, d'une distance S, et
- un rapport S/D qui sera compris entre 0.005 et 1, et de préférence entre 0.15 et 0.70, voire entre 0.20 et 0.50.

Ainsi, on pourra dissiper efficacement le sillage turbulent de l'hélice amont 9 lors de sa propagation vers l'aval. Les sillages qui arrivent au bord d'attaque 61 de l'hélice aval 6 seront relativement peu énergétiques.

D pourra ainsi, dans un cas, correspondre (comme conventionnellement) au diamètre maximal de l'hélice amont 9.

Par ailleurs, le bord de fuite 91 de chacune des pales 90 de la première série de pales 9 est situé longitudinalement en amont d'un bord d'attaque de chacune des pales 60 de la deuxième série de pales 6. Ainsi, on évite des interférences entre les séries de pales.

En liaison avec le bruit, il est aussi proposé que chaque pale présente, sur la première série de pales 9 et/ou sur la deuxième série de pales 6 et à un rayon défini, commun :
- une longueur de segment de circonférence E entre deux pales successives de la circonférence,
- un rapport C/E tel que C/E < 2.5 à toute position radiale le long de l'envergure de la pale, et tel que C/E < 0.8 à l'extrémité libre.

Une faible solidité, C/E, des pales 90,60 augmentera la taille des canaux inter-aubes 59 (figure 5, c'est-à-dire de l'espacement entre deux pales consécutives dans la direction azimutale/circonférentielle). Cela peut éviter la formation d'ondes de choc dans le canal inter-aubes à haut régime de rotation sur certains points de fonctionnement, ce qui est lié à la contraction de l'écoulement dans chaque canal 59. Ces ondes de choc sont à l'origine du "bruit de choc" ou "buzz-saw noise", en anglais.

Diverses études ont par ailleurs démontré que la réduction de bruit peut être favorisée si, les deux hélices 90,60 étant supposées des rotors contrarotatifs, la vitesse de rotation autour de l'axe X de l'hélice amont 90 est supérieure à celle de l'hélice aval 60.

Pour adapter une vitesse de rotation d'hélice, telle que l'hélice amont 9, on pourra utiliser un réducteur de vitesse, qui peut être épicycloïdal, tel que le réducteur de vitesse 104 présenté ci-après.

Dans ce cas, les pales de la première série de pales 9 et de la deuxième série de pales 6 seront donc disposées pour pouvoir être entraînées en rotation autour de l'axe longitudinal central X par une turbine libre de puissance, de façon contrarotative. Un exemple est divulgué dans EP2368030.

Il convient de noter qu'augmenter la vitesse de rotation de l'hélice aval 6 peut augmenter la vitesse relative en bout de pale 51 de l'hélice aval, qui pourrait devenir transsonique (d'où une génération de chocs, et autres).

Dans l'exemple de la figure 30, le moteur central à turbine à gaz (core engine) 3 fonctionne de manière conventionnelle, de sorte que l'air entrant dans l'admission 35 est accéléré et comprimé par le compresseur basse pression 920 et dirigé vers le compresseur haute pression 92 où une compression supplémentaire a lieu. L'air comprimé évacué du compresseur haute pression 92 est dirigé vers la chambre de combustion 930 où il est mélangé au carburant et le mélange est brûlé. Les produits de combustion chauds qui en résultent se dilatent et entraînent ainsi les turbines haute pression 94, basse pression 98 et de libre puissance 96 avant d'être évacués en 33 par la tuyère 97 pour fournir une certaine poussée propulsive. Les turbines haute pression, basse pression et de puissance, libre, respectivement 94, 98, 96, entraînent respectivement les compresseurs haute pression 92 et basse pression 920 et les rotors non-carénés 9, 6, par des arbres d'interconnexion appropriés. Les deux hélices 9,6 non carénées sont contrarotatives, fixées à la turbine de libre 96 et entraînées par celle-ci, via les ensembles de pales contrarotatives 90, 60, 99 (contra-rotating blade arrays).

L'exemple de la figure 31 présente une situation où la turbomachine d'aéronef comprend :
- une turbine libre de puissance 102 comprenant un rotor 103 ;
- une hélice aval 6 et une hélice amont 9, avec l'hélice amont destinée à être mise en rotation autour d'un axe longitudinal central X du système d'hélices, par rapport à un stator de ce système qui peut être la nacelle 5; ce stator pouvant aussi être une pale ou aube fixe d'une autre hélice, par exemple, la pale 6 de la deuxième série de pales sur une turbomachine type USF.et
- un dispositif de transmission mécanique comprenant un boitier de réduction de vitesse ou réducteur de vitesse 104 (ou « gearbox » en anglais) entre un arbre d'entrée entraîné par la turbine, tel que l'arbre 121 ci-après, et les pales de l'hélice amont 9, afin de réduire la vitesse de rotation des pales 90 d'hélice et donc, le bruit généré par cette hélice.

On peut extrapoler cela sur un USF, par exemple en supprimant la partie aval de l'arbre de porte-satellites 117 fixée à l'hélice aval 6.

Dans cet exemple, il s'agit toutefois d'un CROR où l'hélice aval 6 et l'hélice amont 9 sont donc contrarotatives, destinées à être ensemble mises en rotation autour d'un axe longitudinal X du système d'hélices, par rapport à la nacelle 5.

Le rotor 103 est un premier rotor 103.

Le réducteur de vitesse 104 comprend un train épicycloïdal 105 muni d'un planétaire 107 centré sur ledit axe longitudinal X et entraîné par le premier rotor 103 de la turbine libre de puissance 102, au moins un satellite 106 engrenant avec le planétaire 107, un porte-satellite(s) 108 entraînant l'hélice aval 6, ainsi qu'une couronne 109 engrenant avec chaque satellite 106 et entraînant l'hélice amont 9.

La turbine libre de puissance 102 comprend également un second rotor 111 contrarotatif vis-à-vis dudit premier rotor 103, et entraînant en rotation la couronne 109.

Le planétaire 107 centré sur l'axe longitudinal X est porté par un arbre planétaire 113 de même axe, relié solidairement vers l'amont au premier rotor 103, par une bride 115. Ainsi, le premier rotor 103 entraîne directement le planétaire 107 en rotation, qui peut prendre la forme d'une roue dentée extérieurement.

Le porte-satellites 108 est porté par un arbre de porte-satellites 117 de même axe, solidaire de l'hélice aval 6. La couronne 109, centrée sur l'axe X, est portée par un arbre de couronne 119 de même axe. La couronne 109 engrène avec chaque satellite 106. L'arbre 119 s'étend vers l'aval en étant solidaire de l'hélice amont 9, de manière à pouvoir l'entraîner directement en rotation. L'arbre 119 peut se trouver autour de l'arbre de porte-satellites 117 avec lequel il est alors concentrique. La couronne 109, prenant la forme d'une roue dentée intérieurement, est également portée par un autre arbre de couronne 121, de même axe, et s'étendant vers l'amont. L'arbre de couronne 121, situé autour de l'arbre planétaire 113 avec lequel il est concentrique, est relié solidairement au second rotor 111, par le biais d'une bride 123. L'aéronef avance dans la direction 101.

Davantage de détails peuvent être trouvés dans WO2010070066.

Dans les solutions tant de la figure 30 que de la figure 31, des (seconds) moyens d'entrainement 40 sont bien sûr en outre prévus pour faire pivoter, autour de son axe de calage 390 ou 360, chaque pale 90,60 concernée via le bras de calage 39 ou 36 auquel elle est liée fixement. A cette fin, la solution des figures 2,3 peut s'appliquer, par exemple.

Encore pour lutter contre le bruit, on songera à ce que les ondulations 63 de bord d'attaque et/ou celles 93 de bord de fuite soient situées, de préférence uniquement, ou essentiellement:
- au-delà de 0.4x(Re-Ri), en partant du côté de l'extrémité de connexion 53, et/ou
- à (proximité de) la position radiale où la corde C est maximale, sur une longueur de 0.2x(Re-Ri) à 0.8x(Re-Ri) autour de la position de corde maximale.

Une longueur de l'ordre de 0.3x(Re-Ri) autour de la position de corde maximale peut convenir, en particulier.

Près des extrémités libres 51 de pale, les ondulations permettent de réduire le bruit lié au tourbillon de bout de pale. Si les ondulations sont en bord de fuite 91, vers l'extrémité libre de l'hélice amont 9, les ondulations 93 permettent d'améliorer le mélange du sillage et donc de réduire l'intensité du tourbillon de bout de pale.

Les ondulations de bord de fuite 91 permettent également de réduire le bruit propre lié au passage de la couche limite turbulente qui se développe sur l'intrados et l'extrados de la pale 90 et qui rayonne du bruit au niveau du bord de fuite 91.

Si les ondulations 63 sont situées en bord d'attaque 61 de l'hélice aval 6, cela permet de réduire le bruit d'interaction et de mieux décorréler les sources de bruit le long de l'envergure L.

L'intérêt des ondulations de bord de fuite sur les profils de pales 90,60 avec une grande corde C (C > Cmoy, où Cmoy est la corde moyenne de la pale) est de réduire le bruit propre lié à la couche limite, qui devient plus épaisse sur des profils à grande corde (voir sur les figures 32,33 : sections AA' et BB'). Les ondulations 93 au bord de fuite 91 de l'hélice amont 9 entrainent également une réduction du bruit d'interaction (à large bande et tonal) entre le sillage et l'hélice aval, car le mélange de la turbulence et du déficit de vitesse moyenne dans le sillage sont accélérés.

L'inconvénient d'un point de vue acoustique est toutefois alors de limiter les zones du bord d'attaque et du bord de fuite qui peuvent contribuer à la réduction de bruit par la présence des ondulations. Toutefois, limiter les zones du BA et du BF avec des ondulations permet de limiter des éventuelles pertes aérodynamiques, ce qui permet de trouver un compromis aéro-acoustique avantageux. Encore un autre facteur de réduction du bruit peut être identifié, lorsque, comme par exemple figure 4 ou 5 :
- la première série de pales 9 et la deuxième série de pales 6 sont situées vers une extrémité amont du moteur central 3 (configuration "puller"),
- la nacelle 5 présente une entrée d'air 35 qui peut en particulier être une entrée du flux d'air primaire Fp vers le moteur central 3, et
- sur la nacelle 5, l'entrée d'air 35 est située axialement entre la première série de pales 9 et la deuxième série de pales 6, et même plus précisément, et de préférence, entre les axes respectifs 390, 360 de calage des pales de la première série de pales 9 et de la deuxième série de pales 6.

Cela permet de réduire l'envergure L (et donc le rayon Re) de l'hélice aval 6, notamment en liaison avec un "clipping". La taille d'une pale 90 ou 60, et notamment son envergure, est un contributeur au bruit rayonné. Ainsi, une telle configuration permettra de réduire le bruit de la turbomachine.

Sur la nacelle, l'entrée d'air 35 peut être placée sur 360° (couronne) ou suivant uniquement un secteur angulaire. FR3083207 y fait référence. L'entrée d'air 35 peut présenter un bec 37 en saillie sur la nacelle 5.

Pour diminuer l'interaction du sillage de l'hélice amont 9 avec le bec 37, et donc une diminution du bruit, on pourra prévoir, comme par exemple figure 6 :
- que, sur la nacelle 5, le bec 37 d'entrée d'air 35 soit situé à un rayon Rb de l'axe longitudinal central X, et
- que le bord de fuite 91 de la première série de pales 9 présente des ondulations 93 situées au niveau du rayon Rb.

Dans ce cas, on retrouve comme dans le mode de réalisation de la figure 5 l'intérêt lié au fait que le doublet d'hélices 9,6 est positionné en configuration « puller », avec l'entrée d'air du flux primaire entre l'hélice amont 9 et l'hélice aval 6.

Toutefois, des ondulations 93 en bord de fuite des pales de l'hélice amont pourraient perturber l'alimentation (l'écoulement d'air) qui arrive à l'entrée 35 du flux primaire.

Prévoir, selon une configuration type USF, que l'hélice aval 6 est un stator/redresseur d'écoulement qui ne tourne pas autour de l'axe longitudinal central X, à la différence donc de l'hélice amont 9, mais dont les pales 60 peuvent tourner chacune autour de son axe de calage 360, pourra aussi être avantageux, d'un point de vue aérodynamique et acoustique.

Dans ce cas, la turbine du moteur central sera reliée à la première série de pales 9 de façon à n'entraîner en rotation que les pales de la première série de pales 9, les pales de la deuxième série de pales 6 définissant des pales de redresseur d'air. Seules les pales 90 de la première série de pales 9 seront donc disposées pour pouvoir être entraînées en rotation autour de l'axe longitudinal central X par la turbine d'entrainement des pales 90 qui pourra être une turbine libre de puissance. Les pales de la deuxième série de pales 6 définissent des pales de redresseur d'air (« outlet guide vanes » ou « swirl recovery vanes » de stator).

On pourra alors utilement interposer un réducteur de vitesse (tel que celui 104 précité) entre les pales 90 de l'hélice amont 9 et l'arbre de la turbine d'entrainement de ces pales 90, afin de réduire la vitesse de rotation de cette d'hélice, ce qui permet d'optimiser la performance aérodynamique de l'hélice et de réduire le bruit qu'elle génère.

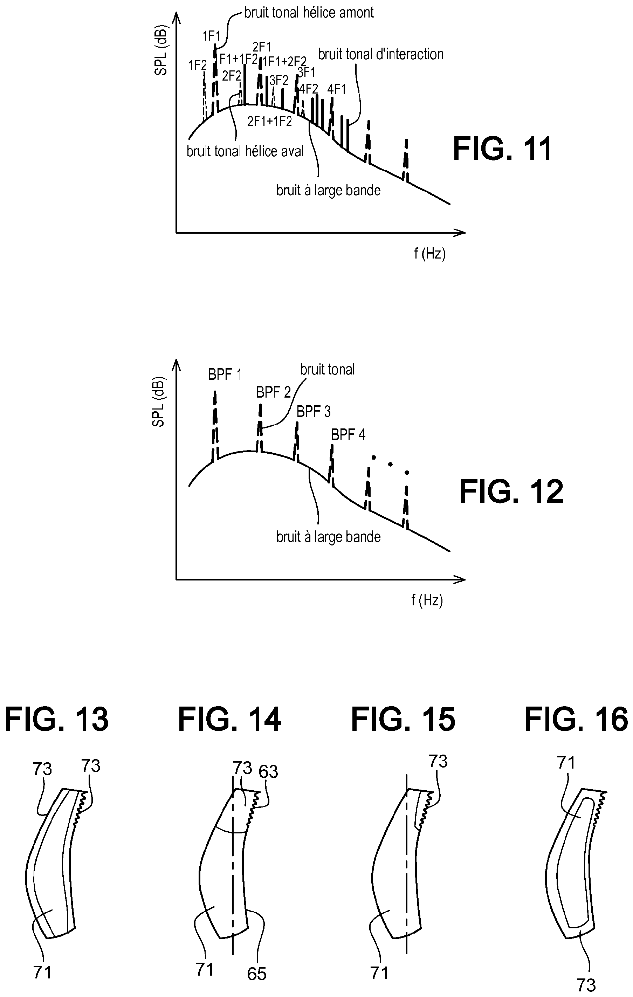

L'avantage d'une configuration USF par rapport à un CROR est de présenter moins de bruit tonal, avec moins de "raies/pics" sur le spectre. En effet, sur un CROR, on peut distinguer les fréquences f de passage des pales (ou "Blade Passing Frequency", BPF, en anglais) de chaque hélice (amont/aval) et ses harmoniques, comme figure 11. De plus, il y a des "raies de combinaison/d'interaction" sur le spectre de bruit SPL d'un CROR. Cependant, sur un spectre de bruit SPL d'un USF il n'y a que les BPF liés à l'hélice amont (comme figure 12), ce qui doit permettre de réduire les niveaux acoustiques. Dans le cas d'un USF, ces BPFs sont principalement liés au bruit de charge aérodynamique sur les pales du rotor (hélice amont) et à l'interaction des sillages du rotor -caractérisés par un déficit de vitesse moyenne- avec le stator.

D'un point de vue mécanique/intégration, une architecture type USF est malgré tout plus simple à mettre en œuvre (moins de parties tournantes notamment) qu'une architecture CROR.

La figure 8 illustre, à titre d'exemple non limitatif, une solution de (seconds) moyens d'entrainement 40 pour faire pivoter, autour de son axe de calage 390 ou 360, chaque pale redresseur concernée via le bras de calage 39 ou 36 auquel elle est liée fixement. Il s'agit d'un système articulé permettant de caler chaque pale redresseur (« outlet guide vane » ou « swirl recovery vane ») 60 si l'hélice aval 6 est de type stator. Cette solution est donc adaptée à une configuration USF et peut être couplé à une hélice amont 9 qui serait contrôlée, par exemple, comme sur les figures 2 et 3, après que l'on ait supprimé le bras 142 et relié le levier 613a ou 613b ci-après cité à des organes actionnement adaptés, en soi connus.

La pale redresseur 60 à calage variable est dans l'exemple rotative radialement à travers la surface externe 50, dans un carter appartenant à la nacelle 5. La pale comprend une partie aube 601, une platine 603 et une tige ou pivot définissant le bras de calage 360. Le pivot 36 est logé dans un orifice radial ménagé dans le carter 5. Un palier du pivot 39 est constitué d'une douille 607 en contact glissant avec le pivot 36. La douille 607 solidaire du carter est en contact avec la platine 603 par l'intermédiaire d'un bossage annulaire 609. La face opposée de la platine 603 par rapport à la douille est balayée par l'air qui travers les deux hélices 9,6. Une rondelle 611 maintient l'aube dans son logement. Un levier commande la rotation de la pale 60 considérée autour de l'axe de calage 360 du pivot pour mettre celui-ci dans la position requise (voir double flèche figure 8) par rapport au flux d'air balayant l'aube. Les mouvements relatifs résultent du glissement des surfaces en contact, ici le pivot 39 et la platine 603 avec la douille 607. Le levier s'étend soit vers l'aval (traits 613a, notamment dans le cas d'un propulseur pousseur/pusher), soit vers l'amont (traits pointillés 613b, notamment dans le cas d'un propulseur tracteur/puller). Les organes qui actionnent le levier 613a ou 613b sont non représentés ; ils comprennent un actionneur et une commande qui peuvent, ensemble, aussi actionner les pales 90 pour les caler chacune autour de leur axe 390, comme déjà expliqué en liaison avec les figures 2,3. Pour davantage de détails, on peut se reporter à EP17174450.

Concernant les sources de bruit caractéristiques d'un moteur à hélices non-carénées, le rayonnement acoustique d'un profil aérodynamique est similaire à celui d'un dipôle (deux lobes de rayonnement principaux), dont la direction de propagation privilégiée est normale à la corde du profil (voir figure 10). Les pales redresseur 60 situés à 6h et 12h sur architecture USF vont ainsi contribuer aux niveaux de bruit latéral (sur le côté) de l'aéronef. Les stators situés à 3h et 9h sur architecture USF vont quant à eux contribuer aux niveaux de bruit au-dessus et en-dessous de l'aéronef. Au titre d'effet sur le bruit rayonné sous trace lors des phases de décollage et atterrissage, un mode de réalisation propose d'appliquer des ondulations uniquement sur les pales du redresseur qui contribuent majoritairement au bruit rayonné sous trace. Même si un effet d'optique peut le laisser croire sur la figure 10, l'envergure des pales (L=Re-Ri) peut être constant sur toute la périphérie de l'hélice considérée.

Aussi est-il également proposé que, comme figure 10, circonférentiellement autour de l'axe longitudinal central X, seules les pales 60 de redresseur d'air situées dans une première plage angulaire de +/- 60° par rapport à 3h, et dans une deuxième plage angulaire de +/- 60° par rapport à 9h, présentent des ondulations, repérées 63 ailleurs.

Il s'agit d'un compromis efficacité anti-bruit/coûts et performance aérodynamique.

Encore un autre aspect peut utilement concourir à lutter contre le bruit : que des ondulations 93 et 63 soient situées respectivement sur le bord de fuite 91 de l'hélice amont 9 et sur le bord d'attaque 61 de l'hélice aval 6.

En fait, des ondulations 93 en bord de fuite de l'hélice amont ont pour double avantage :
(i) de réduire le bruit propre de la pale (lié au rayonnement acoustique produit par la couche limite sur les surfaces des pales lors de son passage au niveau du bord de fuite) et,
(ii) d'améliorer le mélange du sillage, ce qui réduit l'intensité du tourbillon en bout de pale et du déficit de vitesse moyenne lorsqu'il vient impacter l'hélice aval 6.

L'avantage d'ondulations 63 au bord d'attaque de l'hélice aval 6 est de réduire le bruit issu de l'interaction du sillage et des tourbillons en bout de pale sur l'hélice amont 9 qui peuvent interagir avec l'hélice aval. Un avantage est donc de réduire (ou d'éviter) le « clipping » en extrémité de pale sur l'hélice aval. En effet, réduire le « clipping » sur les pales 60 de l'hélice aval 6 permet d'améliorer les performances aérodynamiques car une partie supplémentaire de la giration de l'écoulement à des rayons élevés, près de la limite externe du rayon Re, est récupérée en extrémité 51 de pale sur l'hélice aval 6. Cela permet donc de ne pas augmenter la corde de l'hélice aval 6 (afin d'assurer la même surface portante que celle d'une hélice aval sans « clipping »), notamment dans le cas d'un CROR.

Combiner ainsi les ondulations 93 en BF et 63 en BA augmente toutefois la complexité du système et les coûts de mise en œuvre, par rapport à une solution dissociée, comme cela est proposé plus avant dans la description. En effet, plus les pales ont des ondulations, plus les pièces sont complexes et chères à produire (possiblement plus de dérogations/non-conformités à traiter, plus de défauts de fabrication, etc...). Les impacts mécaniques liés à l'augmentation de la corde C d'une hélice sont en outre comme suit : Augmenter la corde C en diminuant l'envergure L rend la pale moins résistante à l'ingestion d'oiseau au BA/BF et elle devient surtout plus difficile à intégrer à cause du calage variable : la pale peut dépasser de sa plateforme ce qui provoque des fuites aérodynamiques de façon radialement intérieure au pied de pale, la partie radialement intérieure du pied de pale tend à être très chargée mécaniquement, le moment d'inertie augmente, ce qui génère un couple autour de l'axe de calage 390 ou 360 important et donc un système de changement de pas et un système de rappel en drapeau à adapter. L'intégration d'une telle pale peut impacter négativement le rapport de moyeu, Ri/Re.

Les bords d'attaque et de fuite de la pale 9 peuvent en effet dépasser la plateforme (circulaire) au niveau du pied de la pale. La plateforme circulaire est solidaire/tourne avec la pale 9, mais le support annulaire 24 et la paroi de la nacelle 5 sont fixes. Cela implique que des fuites d'air non souhaitées peuvent exister entre les pales et la paroi de la nacelle au niveau du BA et du BF, en pied de pale.

Plusieurs géométries ou motifs de dents des ondulations peuvent individuellement ou en combinaison être utilisés au bord d'attaque et/ou bord de fuite des pales 9,6 : dents de forme sinusoïdale, carrée, rectangulaire, des fentes/rainures, etc... L'intérêt d'utiliser plusieurs motifs est de diminuer la corrélation des sources de bruit le long des BA et/ou BF, ce qui doit favoriser la réduction de bruit ; voir les informations fournies par ailleurs sur les angles γ, β1, β2 et les formes des ondulations, telles que les formes arrondie 81 ou elliptique 79 présentées ci-après. Suivant l'une au moins parmi les caractéristiques suivantes : motif (ou géométrie), amplitude, espacement, positionnement radial des ondulations le long de l'envergure, des ondulations pourraient varier (être différentes) entre les différentes pales 90,60 d'une même hélice (amont et/ou aval) et/ou entre au moins certaines des pales de la première série de pales 9 et au moins certaines des pales 6 de la deuxième série de pales. Cela permettrait de définir plusieurs familles de pales avec par exemple des motifs géométriques différents. On pourrait donc faire varier comme géométrie pour une ou plusieurs pales, la corde, la cambrure, l'épaisseur maximale, ... afin de définir une hélice 9,6 avec des pales 90,60 hétérogènes. Un intérêt d'utiliser plusieurs motifs de géométries différentes au niveau du bord d'attaque de chaque pale 90 et/ou 60 est de diminuer la corrélation des sources de bruit. Cela peut être particulièrement intéressant si la solidité de l'hélice 9 ou 6 est grande ou si la taille des structures tourbillonnaires est importante.

Par ailleurs, l'intérêt d'utiliser plusieurs des motifs géométries différents au niveau du bord de fuite de l'hélice amont est d'améliorer le mélange des sillages.

La recherche d'une réduction du bruit peut aussi être associée à d'autres considérations. L'ordre ci-après de ces considérations n'est pas lié à leur importance.

Première considération : On pourra chercher à assurer la tenue mécanique améliorée des pales 90 et/ou 60, en fonctionnement nominal de la turbomachine, et en cas d'ingestion d'oiseaux. Les efforts mécaniques sur les pales présentant des ondulations de BA/BF pourrait être supérieurs à un cas de référence ayant des BA/BF lisses. Pour alors améliorer la tenue mécanique des pales présentant des ondulations, il est proposé :
- que chaque pale 90,60 à ondulations de la première série de pales 9 et/ou de la deuxième série de pales 6 présente une épaisseur maximale (repérée e figure 2) entre la face d'intrados 55 et la face d'extrados 57, et
- que, sur les pales, l'épaisseur maximale des pales se situe près du pied 53 de pale, à une distance inférieure à 0.1x(Re - Ri) à partir de l'extrémité de connexion 53 (extrémité située au rayon Ri). Voir coupe AA' et BB' figures 7, 32 et 33.

Deuxième considération : On pourra chercher à assurer un rapport de moyeu qui varie dans une plage permet de garantir un bon compromis entre les besoins aérodynamiques (pales grandes d'où un rapport Ri/Re faible) et les besoins d'intégrations de systèmes annexe dans le moyeu, c'est-à-dire sous la surface 50 (dispositif permettant la variation de calage des pales, canalisations d'huile et d'air, etc...d'où un rapport Ri/Re de valeur élevé).

Aussi est-il proposé que chaque pale 90 et/ou 60 à BA et/ou BF ondulé de la première série de pales et/ou de la deuxième série de pales puisse présenter un rapport Ri/Re de moyeu-à-extrémité libre tel que Ri/Re est compris entre 0.10 et 0.50.

Troisième considération : On pourra chercher à améliorer la tenue mécanique des pales, notamment en cas d'ingestion d'oiseaux.

Aussi est-il proposé que les ondulations, telles que 93 ou 63, présentent, par pale ou sur une au moins desdites pales 9 ou 6, une amplitude h(r) (qui peut être maximale) entre un sommet 635 et un creux 634 adjacents, telle que : 0.0005xCmax ≤ h(r) ≤ 0.5xCmax, où :
- Cmax est la corde maximale de la pale, et
- h(r) correspond ici à la différence (si nécessaire maximale) de corde C entre un profil au niveau d'un sommet 635 et un profil au niveau d'un creux 634 adjacents, dans la direction de l'envergure (L) de la pale, ou radialement à l'axe longitudinal central (X).

Les figures 13 à 26 sont conformes à cela.

Amplitude (hr, tel que h1,h2..) a sinon aussi pour sens : profondeur des ondulations entre le sommet et le fond de la dent considérée, voir la figure 27 pour une illustration dont on appliquera le principe aux figure 13 à 26. Des ondulations, telles que 93,63, trop profondes pourraient avoir un impact négatif sur la performance aérodynamique des pales et présenter des difficultés pour la tenue mécanique des pales en cas d'ingestion d'oiseaux.

Quatrième considération : On pourra chercher à adapter la géométrie des ondulations en fonction des caractéristiques locales de l'écoulement gazeux.

Ainsi, pourra t'on utilement prévoir :
- que les ondulations 93,63 au bord d'attaque 61 et au bord de fuite 91 présentent des géométries ou motifs différents entre elles, et/ou
- que les ondulations 93 de certaines des pales de la première série de pales 9 soient différentes des ondulations 63 de certaines des pales de la deuxième série de pales 6.

Dans le cas par exemple d'ondulations de bord de fuite, leur amplitude et espacement pourraient utilement être dimensionnées par les grandeurs turbulentes de la couche limite au bord de fuite de la pale, où par exemple les ondulations pourraient être définies en fonction de la longueur de corrélation spatiale des fluctuations de pression pariétale le long du bord de fuite ou en fonction de l'épaisseur de couche limite. Dans le cas d'ondulations de bord d'attaque, leur amplitude et espacement serait dimensionnés par les grandeurs aérodynamiques de l'écoulement incident (turbulence atmosphérique, sillages de pales à l'amont, ...). Dans ce cas, l'un des paramètres dimensionnants favorable pourra être l'échelle intégrale de la turbulence.

Aussi est-il proposé que, comme illustré en exemple figures 14,19,20 (où les amplitude et espacement, h(r) et λ(r), peuvent être compris à partir de l'illustration de la figure 27), sur certaines au moins des pales 90 et/ou 60, les ondulations présentent une amplitude, h(r), et un espacement entre deux sommets successifs d'ondulation, λ(r), qui varie(nt). Il convient de noter que h(r) et λ(r) peuvent être des fonctions définies par morceaux le long de l'envergure L de la pale 90,60 en fonction de la position radiale, r.

Cinquième considération : Outre améliorer la tenue mécanique des pales et de la géométrie des dents, notamment en cas d'ingestion d'oiseaux, on pourra chercher à simplifier la fabrication des pales, car il est a priori plus simple d'usiner des géométries complexes sur des pièces métalliques que sur des pièces en composite (matériau typique, fibreux, de fabrication des pales 90,60,). En outre, un capot ou clinquant 73 à ondulations de BA et/ou BF pourrait être vendu ou commercialisé en option pour les avionneurs et/ou les compagnies aériennes souhaitant disposer de performances acoustiques améliorées. Prévoir des ondulations uniquement sur un capot mécanique (par exemple métallique) peut par ailleurs simplifier les opérations de maintenance et améliorer la tenue à l'érosion.

Aussi est-il proposé, comme schématisé figures 13 et suivantes, que certaines au moins des pales 90,60 comprennent un matériau composite 71 et, sur la face d'intrados 55 et/ou la face d'extrados 57, qu'au moins un capot 73 de renfort mécanique métallique soit fixé avec le matériau composite et s'étendant le long au moins d'une partie du bord d'attaque et/ou du bord de fuite. Le(s) capot(s) métallique(s) peuvent n'être pas que le long des bords d'attaque ou bord de fuite.

Il peut aussi s'agir de plaques de renfort en surface de l'intrados 55 et/ou de l'extrados 57. Le poids est à considérer ; le caractère amovible vis-à-vis du matériau composite 71 de la pale, donc remplaçable, du capot 73 également.

Sixième considération : Réduire le poids des pales permettra d'ailleurs de réduire la consommation de carburant du propulseur aéronautique sur lequel est installé le doublet d'hélices 9,6. Aussi est-il proposé que la pale (ou sa partie composite, telle que la partie 71) soit un assemblage de matériaux organiques (résines thermodurcissables, résines thermoplastiques) renforcés ou non par des fibres de carbone selon l'un des procédés de fabrication multiples possibles (tissage, tressage, stratification, bobinage...). Les fibres de renfort peuvent également être des fibres de verre, kevlar ou aramide.

Septième considération : On pourra chercher à limiter le nombre de pièces à fabriquer et optimiser la tenue mécanique de la pale.

Aussi est-il proposé que, par pale 90 ou 60, le renfort ou capot 73 relie le BA au BF par l'extrémité libre 51 de la pale. Ceci sera particulièrement intéressant en cas de présence d'ondulations sur le renfort ou capot 73. On en voit des exemples notamment figures 16,17,20,22.

Huitième considération : On pourra chercher à réduire l'intensité du tourbillon extrémité libre 51 de pale, afin de réduire l'interaction du tourbillon de bout de pale 51 de l'hélice amont 9 avec l'hélice aval 6.

Aussi est-il proposé que, comme illustré sur quelques exemples figures 23,24, l'extrémité libre 51 de l'une au moins des pales 90 ou 60 présente un « proplet » ou un changement abrupt de l'angle de devers, repéré 77.

Neuvième considération : On pourra chercher à réduire l'intensité du tourbillon d'extrémité libre 51 de pale, et donc l'interaction du tourbillon de bout de pale 51 de l'hélice amont 9 avec l'hélice aval 6.

Aussi est-il proposé, comme illustré sur quelques exemples figures 25,26 :
- que l'extrémité libre 51 de l'une au moins des pales 90 ou 60 ait une forme elliptique 79, ou
- que cette tête 51 de pale ait une forme arrondie 81 et donc que les lignes de BA et de BF convergent (ou soient confondues) en extrémité libre 51 de pale.

Ainsi, les lignes de bord d'attaque, tel que 61, et de bord de fuite, tel que 91, tendront à être confondues.

Dixième considération : On pourra chercher à faciliter la fabrication d'ensemble, la maintenance, et limiter alors les temps d'intervention.

Aussi est-il proposé que, comme illustré, les ondulations soient formées uniquement sur le capot de renfort métallique 73, pas sur le matériau composite 71.

Onzième considération : On pourra chercher à éviter l'accumulation de glace sur les bords d'attaque/fuite, ce qui peut dégrader fortement les performances (diminution de la poussée, diminution du rendement, décrochage des couches limites, etc...).

Aussi est-il proposé que le propulseur aéronautique comprenne un dispositif de chauffage, pour des fonctions de dégivrage ou antigivrage, et qui pourrait être raccordé au capot 73 de renfort métallique
Comme illustré en exemple figure 9, un dispositif de chauffage 75, pouvant comprendre des résistances électriques ou des canaux de passage d'un fluide chaud, dans le capot de renfort métallique 73, peut donc être adjoint et raccordé à ce capot depuis l'intérieur de la nacelle 5. Il faudra alors maitriser une possible augmentation de l'épaisseur de la pale au BA et/ou BF afin d'intégrer le système de dégivrage dans un encombrement relativement réduit.

Douzième considération : On pourra chercher à limiter le poids des pales 90 et/ou 60.

Aussi est-il proposé, comme illustré en exemple sur plusieurs des figures 13 et suivantes, que le capot de renfort 73 de la pale occupe moins de 50% du volume total de la pale, et de préférence, moins de 25% du volume total de la pale.

Treizième considération :
On pourra chercher à augmenter la tenue mécanique du bord d'attaque et/ou bord fuite présentant des ondulations. En effet, les dents/ondulations peuvent présenter des sommets particulièrement allongés (figure 27) ou pointus (figure 28).

Aussi est-il proposé, comme illustré en exemple sur plusieurs des figures 13 et suivantes, que la protection le bord d'attaque et/ou bord de fuite et/ou tête de pale 90 et/ou 60 (extrémité libre 51) soit fabriquée en métal, avec capot de renfort 73 intégré ou rapporté par fixation amovible ou non, titane ou alliage de titane, acier, nickel ou alliage de nickel, acier inoxydable.

Quatorzième considération : On pourra chercher à augmenter la résistance à la fissuration d'une pale renforcée par un renfort métallique 73 comportant les ondulations.

Aussi est-il proposé que le renfort métallique 73 amovible et comportant les ondulations soit rapporté sur la pale en matériau composite 71 par collage en utilisant une colle époxy. La colle peut être renforcée en nodules thermoplastiques ou élastomériques. Ce mode d'assemblage est pertinent pour un assemblage métal/composite.

On peut aussi utiliser, en complément ou alternative, un mode d'assemblage par la géométrie, par exemple : insert métallique 73 à forme localement en queue d'aronde et cavité de forme complémentaire dans le composite 71, ou inversement. L'avantage réside alors dans la possibilité de changer uniquement le renfort métallique 73 (amovible) en cas de dommage causé par un impact oiseau ou par érosion.

Qu'il y ait un renfort métallique 73 ou une pale 90 ou 60 uniquement matériau composite, les ondulations pourront aussi être réalisées par un procédé d'usinage mécanique, forge ou fonderie (si métallique), fabrication additive ou même usinage chimique.

Quinzième considération : On pourra chercher à limiter les endroits présentant des ondulations au juste besoin pour maximiser le gain acoustique en minimisant l'impact sur l'aérodynamique (rendement) et mécanique (tenue en cas d'ingestion d'oiseaux, érosion, etc...).

Aussi est-il proposé que les ondulations, au BA et/ou BF, ne soient pas en une seule partie/longueur mais occupent plusieurs régions du BA et/ou BF séparées par des zones avec un BA et/ou BF lisse, comme illustré en exemple sur les figures 14, 15, 21, 22 en particulier.

Seizième considération : On pourra aussi chercher à définir une zone de raccordement entre la (les) partie(s) lisse(s) et celles à ondulations, ce qui est intéressant d'un point de vue aérodynamique et mécanique.

Aussi est-il proposé, sur certaines au moins des pales 90,60 :
- qu'une première partie du bord d'attaque et/ou du bord de fuite, tel que 61 et/ou 91, soit lisse, sans ondulation, comme le long des zones 95 et/ou 65 des pales 90,60, et notamment à proximité du pied de pale, donc à une distance inférieure à 0.1x(Re - Ri) à partir de l'extrémité de connexion 53,
- qu'une seconde partie 97 et/ou 67 du bord d'attaque et/ou du bord de fuite présente lesdites ondulations, et
- que l'amplitude des ondulations à (proximité de) la position radiale où la seconde partie se raccorde à la première partie, de façon que le raccordement soit progressif, évolue de façon monotone et même strictement monotone (notamment en diminuant) : zones de raccordement 99 et/ou 69 ; voir en exemple les figures 14,17,20,22, les repères 69 et 99 n'existant que sur certaines de ces figures.

Dix-septième considération : On pourra aussi chercher à limiter les éventuelles pertes aérodynamiques et difficultés/coûts liés à la fabrication d'ondulations en bord d'attaque et/ou bord de fuite.

Aussi est-il proposé que, le long du bord d'attaque et/ou du bord de fuite de certaines au mois des pales ondulées 90,60, suivant la direction radiale ou l'envergure L, les ondulations s'étendent selon une longueur H qui est limitée à : H/(Re-Ri) < 0.8, comme dans l'exemple de la figure 5 ou 7.

Si nécessaire, la longueur H sera cumulée sur la longueur des zones ondulées d'un même BF ou BA, si ces zones sont multiples (H₁, H₂, H₃, ...), comme sur certaines figures d'exemples (voir notamment figures 9,19,22).

Dix-huitième considération : On pourra aussi chercher à augmenter l'amplitude des ondulations où l'échelle de longueur de la turbulence est plus grande. En effet, plusieurs études montrent que l'échelle intégrale de la turbulence dans le sillage d'une partie tournante augmente vers le bout de pale.

Aussi est-il proposé que l'amplitude (h(r)) et/ou l'espacement entre deux sommets successifs d'ondulations, λ(r), de certaines au moins des ondulations en BF et/ou BA varie de manière monotone, voire de préférence ou strictement monotone, en direction de (voire à proximité de) l'extrémité libre 51 de la pale considérée 90 et/ou 60.

Dix-neuvième considération : Pour optimiser les emplacements des ondulations en termes de rapport gains sur la réduction du bruit/coûts/poids/résistance pourra amener à ce que les ondulations 93,63 soient situées au moins sur au moins une partie du bord de fuite 91 de la première série de pales 9 et au moins une partie du bord d'attaque 61 de la deuxième série de pales 6. Il pourra ainsi y avoir des ondulations de bord d'attaque et bord de fuite sur toutes les pales à la fois. En prévoir uniquement sur ces bords de fuite 91 de la première série de pales 9 et bord d'attaque 61 de la deuxième série de pales 6 serait toutefois un compromis pertinent.

Vingtième considération : Le bord d'attaque et/ou de fuite des pales 90 et/ 60 pourrait être localement poreux. On peut ainsi ultimement prévoir que le bord d'attaque et/ou de fuite de certaines au moins des pales 90,60 soit est formé localement par un matériau poreux 85, à l'endroit de certaines au moins des ondulations. En tant que matériau poreux 85, une mousse métallique peut par exemple être prévue, notamment sur les régions avec des ondulations 93 et/ou 63, comme schématisé figures 27,28, où λ (ou λ1, λ2) correspond à λ(r) et h (ou h1,h2,h3) correspond à h(r). En plus de permettre une atténuation acoustique, le matériau poreux 85 a pour effet de diminuer les concentrations de contraintes par sa souplesse mécanique. Cette optimisation locale de la rigidité du matériau limite l'apparition de crique sous chargement cyclé, augmentant ainsi la durée de vie de la protection métallique du bord d'attaque, en 61. Le matériau poreux 85 définira une partie de la forme ondulée 63. Ainsi, ensemble, le matériau poreux 85 et le corps environnant de la pale (partie métallique 73 ou corps composite 71, repérés 71/73 figures 27,28) définiront alors les ondulations 63 au BA de la pale. Le matériau poreux 85 est intégré à la pale, en remplacement d'une partie du renfort métallique 73 ou du corps composite 71. Le matériau poreux 85 occupera utilement des fonds ou des creux 634 d'ondulations.

Vingt et unième -considération : On pourra aussi chercher à réduire l'interaction d'un tourbillon (ou un décollement) en extrémité libre 51 de pale.

Aussi est-il proposé que les pales 90 ou 60 des hélices amont et/ou aval présentent un rayon Re plus grand au bord d'attaque (BA) qu'au bord de fuite (BF), c'est-à-dire : Re,BA > Re,BF, lorsque les lignes de BA et de BF ne sont pas confondues, comme schématisé sur l'exemple de la figure 29.

Les trois configurations qui suivent sont schématisées figures 36 et 37 :
Vingt-deuxième considération : On pourra aussi chercher à réduire l'interaction d'un tourbillon (ou un décollement) en extrémité libre 51 de pale en réduisant la charge en extrémité libre 51 de pale 90 de la première série de pales 9.

Aussi est-il proposé (comme par exemple sur la figure 36) que les pales 90 de l'hélice amont 9 présentent la flèche la plus grande à 0.4x(Re-Ri) de son extrémité libre 51, où les vitesses relatives incidentes sont plus élevées. En effet, augmenter la flèche permet de réduire la vitesse incidente qui est perçue par la pale, ce qui permet de réduire sa charge et donc le bruit. Dans un mode de réalisation particulier, l'augmentation de la flèche à proximité de l'extrémité libre 51 peut être réalisée en définissant un rayon Re plus bas au bord d'attaque (BA) qu'au bord de fuite (BF), c'est-à-dire : Re,BA < Re,BF, lorsque les lignes de BA et de BF ne sont pas confondues. Cela peut être combiné avec des pales de l'hélice aval 6 présentant un Re,BA>Re,BF pour les raisons indiquées dans la vingt deuxième considération.

Sur la figure 36, l'angle de flèche (marqué par des doubles pointes) de la pale à plusieurs rayons. La flèche de la pale augmente à proximité de son extrémité libre 51, sur l'aube 9 prise en exemple. ReBA et ReBF marquent le rayon Re précité, entre donc l'axe longitudinal central (X) et un emplacement sur l'extrémité libre 51 au niveau du bord d'attaque et du bord de fuite de la pale, respectivement.

Vingt-troisième considération : On pourra aussi chercher à décorréler les sources de bruit le long des bord d'attaque 61 et bord de fuite 91, ainsi que leurs interactions entre les hélices 9,6.

Aussi est-il proposé que les ondulations de bord de fuite 93 et de bord d'attaque 63 présentent une amplitude (h(r)) et/ou un espacement (λ(r)) qui varie(ent) inversement dans la direction radiale vers l'extrémité libre 51 de la pale, comme sur la figure 37.

Autrement dit, il est proposé que
- les ondulations de bord de fuite 93 sur les pales 90 de la première série de pales 9 diminuent (ou augmentent) en amplitude, h(r), et/ou espacement, λ(r), vers l'extrémité libre 51,
- les ondulations de bord d'attaque 63 sur les pales 60 de la deuxième série de pales 9 augmentent (ou diminuent) en amplitude, h(r), et/ou espacement, λ(r), vers l'extrémité libre 51. Vingt-quatrième considération : Pour encore mieux décorréler les sources de bruit et réduire les interactions entre les hélices, il est aussi proposé :
   - que, vers l'extrémité libre 51, les ondulations de bord de fuite 93 sur les pales 90 de la première série de pales 9 diminuent en amplitude h(r), et/ou en espacement, λ(r), et
   - que les ondulations de bord d'attaque 63 des pales 60 de la deuxième série de pales 6 augmentent vers l'extrémité libre 51 de ces pales 60.

Vingt-cinquième considération : On pourra aussi chercher à réduire les sources de bruit à l'endroit où le rayonnement acoustique est maximal, c'est-à-dire, à proximité de l'extrémité libre 51.

Aussi est-il proposé qu'à proximité des extrémités libres des pales 90 de la première série de pales 9 et des pales 60 de la deuxième série de pales 6, il y a des ondulations de bord de fuite 93 et de bord d'attaque 63, et que ces ondulations commencent par une dent ou un sommet 630,635, pas par un creux.

Concernant chaque pale, et ce au moins en partie intermédiaire de son envergure L, il sera préférable :
- que son bord d'attaque soit convexe, ou bombé vers l'amont, et
- que son bord d'attaque soit concave, ou creusé vers l'aval.

Et on notera encore que, parmi les configurations possibles des pales 90 et/ou 60, on pourra trouver :
- certaines pales à bord d'attaque lisse, sur toute l'envergure L, et à bord de fuite au moins en partie ondulé, et
- d'autres pales à bord de fuite lisse, sur toute l'envergure L, et à bord d'attaque au moins en partie ondulé.

Concernant les possibles variations d'angle de calage Δγ, on pourra aussi se reporter figures 35 et 39 à 41, pour confirmer ce qui suit :
D'abord, une pale, telle que 6 ou 9, peut être considérée comme un empilement de coupes ou de profils aérodynamiques selon la direction de l'envergure L et/ou selon une direction radiale (ou perpendiculaire) par rapport à l'axe central X.

Ensuite, l'angle de calage ("pitch angle" en anglais) se définit toujours comme étant l'angle entre le plan de rotation et la corde du profil, c'est-à-dire de la pale.

Ainsi, les ondulations présentent des sommets (630,635) de dent et des creux (632,634) de dent se succédant alternativement sur le profil considéré, au bord d'attaque et/ou au bord de fuite.

Et, pour assurer un compromis favorable entre efficacité acoustique, maîtrise des décrochements aérodynamiques, résistance mécanique non perfectible, il est proposé que certaines au moins desdites pales de la première série de pales 9 et/ou de la deuxième série de pales 6 présentent chacune, sur ce(s) zone(s) du profil et suivant l'envergure (L) de la pale ou radialement à l'axe longitudinal central (X), une variation d'angle de calage (Δγ) inférieure, en valeur absolue, à 45°, voire 0° ≤ Δγ ≤ 30°, en valeur absolue, entre :
- une première droite reliant le bord d'attaque et le bord de fuite, à un premier rayon où est situé l'un desdits sommets (630 ou 635) de dent et
- une deuxième droite reliant le bord d'attaque et le bord de fuite, à un deuxième rayon où est situé l'un desdits creux (632 ou 634) de dent, adjacent audit un des sommets de dent.

La figure 39 permet d'ailleurs d'illustrer un exemple où Δγ=∥γ₆₃₄- γ₆₃₅∥, avec :
- γ634 qui est donc l'angle de calage de la pale considérée à l'endroit de ladite première droite reliant le bord d'attaque et le bord de fuite, à un premier rayon contenant le creux de dent 634,
- γ635 qui est donc l'angle de calage de la pale considérée à l'endroit de ladite première droite reliant le bord d'attaque et le bord de fuite, au premier rayon contenant le sommet de dent 635, et,
- Δγ qui est donc la variation d'angle de calage entre les angles γ634 et γ635 des creux et sommet respectifs adjacents.

Par ailleurs, il est donc aussi proposé, pour les mêmes raisons que ci-avant, que certaines au moins desdites pales de la première série de pales 9 et/ou de la deuxième série de pales 6 présentent chacune, suivant l'envergure (L) de la pale 90,60 ou radialement à l'axe longitudinal central (X), une dite variation d'angle de calage (Δγ) inférieure, en valeur absolue, à 45°, voire 0° ≤ Δγ ≤ 30°, en valeur absolue, entre :
-- une troisième droite reliant le bord d'attaque et le bord de fuite, à un premier rayon où est situé un premier desdits sommets 635 de dent et
-- une quatrième droite reliant le bord d'attaque et le bord de fuite, à un deuxième rayon où est situé un second desdits sommets 630 de dent, adjacent audit premier sommet 635.

La même considération peut s'appliquer en remplaçant « premier desdits sommets 635 de dent » et « second desdits sommets 630 de dent » respectivement par « premier desdits creux 632 de dent » et « second desdits creux 634 de dent ». Les figures 40 et 41 illustrent cela, avec les mêmes zones (sommets et creux).

A chaque droite des groupes de ces première et deuxième droites et/ou troisième et quatrième droites, on peut substituer un plan perpendiculaire à la direction de l'envergure L de la pale.

« Adjacent(s)» équivaut conventionnellement à « consécutif(s) » dans la direction de l'envergure et/ou radialement par rapport à l'axe longitudinal central (X).

Ainsi, comme illustré à titre d'exemple figure 34 :
- la zone du profil à l'endroit du sommet 635 de dent et celle à l'endroit du creux 634 de dent sont adjacents,
- la zone du profil à l'endroit du sommet 630 de dent et celle à l'endroit du creux 634 de dent sont adjacents,
- la zone du profil à l'endroit du sommet 635 de dent et celle à l'endroit du creux 632 de dent sont adjacents.

La variation d'angle de calage (Δγ) correspond donc bien à l'écart (en valeur absolue) entre les angles de calage respectifs de deux dites zones précitées adjacentes, tel qu'illustré à titre d'exemple figure 36.

Comme on l'a compris, une zone de profil à l'endroit d'un creux est une zone (une portion de profil) obtenue par une coupe au niveau d'un minimum local de corde dans une région du BA et/ou du BF présentant desdites ondulations. Une zone de profil à l'endroit d'un sommet est une zone (une portion de profil) obtenue par une coupe au niveau d'un maximum local de corde dans une région du BA et/ou du BF présentant desdites ondulations ; Voir notamment figure 38 où r est une distance radiale sur la pale, par rapport à l'axe principal X et les sommet 930 et creux 932 sont des zones d'ondulations sur une pale 9, en BF, dans cet exemple.

Plus avant dans la description des valeurs privilégiées et leurs avantages, donc avec les problèmes qu'ils aident à (mieux) résoudre, ont en outre été présentés pour les angles Δγ, Δβ1, Δβ2. On s'y reportera utilement.

## Revendications

1. **Un propulseur aéronautique** le long duquel un écoulement gazeux peut circuler d'amont vers l'aval, le propulseur présentant un axe longitudinal central (X), et comprenant:
a) une première série de pales (9),
b) une deuxième série de pales (6) positionnées à l'aval de la première série de pales (9),
- des moyens d'entrainement (3,18,21,23,40,94,104,920) pour entraîner en rotation autour de l'axe longitudinal central les pales de l'une au moins des première série de pales (9) et deuxième série de pales (6),
c) une nacelle (5) qui présente une surface externe (50) aérodynamique par rapport à laquelle la première série de pales (9) et la deuxième série de pales (6) font saillie radialement à l'axe longitudinal central (X), chaque pale de la première série de pales et de la deuxième série de pales présentant :
-- une extrémité libre (51) opposée à une extrémité de connexion (53) formant un pied de pale proche de la nacelle (5),
-- une face d'intrados (55) et une face d'extrados (57),
-- à un rayon centré sur l'axe longitudinal central (X), une corde C,
-- un rayon (Ri) entre l'axe longitudinal central (X) et un emplacement, sur la pale ou un bras de calage (39,36) de la pale, qui vient de niveau avec la surface externe (50) de la nacelle (5),
-- un rayon (Re) entre l'axe longitudinal central (X) et un emplacement sur l'extrémité libre (51) de la pale le plus éloigné de l'axe longitudinal central (X), suivant une direction transversale à l'axe longitudinal central (X), et
-- une envergure (L) définie, radialement à l'axe longitudinal central (X), entre l'extrémité libre (51) et l'extrémité de connexion (53), suivant ladite direction transversale,
certaines au moins des pales de la première série de pales (9) étant à calage variable, de sorte que chacune d'elles peut pivoter autour d'un dit bras de calage (39) auquel ladite pale est fixée, autour d'un axe de calage (390) qui traverse la pale (90), et/ou
certaines au moins des pales de la deuxième série de pales (6) étant à calage variable, de sorte chacune d'elles peuvent pivoter autour d'un dit bras de calage (36) auquel ladite pale est fixée, autour d'un axe de calage (360) qui traverse la pale (60),
**dans lequel** propulseur :
- l'une au moins des pales de la première série de pales (9) présente un bord de fuite (91) le long duquel s'étendent des ondulations (93), et/ou l'une au moins des pales de la deuxième série de pales (6) présente un bord d'attaque (61) le long duquel s'étendent des ondulations (63), lesdites ondulations présentant des sommets (635) de dent et des creux (634) de dent se succédant alternativement, et,
- certaines au moins desdites pales de la première série de pales (9) et/ou de la deuxième série de pales (6) présentent chacune, suivant l'envergure (L) de la pale (90,60) ou radialement à l'axe longitudinal central (X), une variation d'angle de calage (Δγ) inférieure à 45°, entre :
-- une première droite reliant le bord d'attaque et le bord de fuite, à un premier rayon où est situé l'un desdits sommets (635) de dent et
-- une deuxième droite reliant le bord d'attaque et le bord de fuite, à un deuxième rayon où est situé l'un desdits creux (634) de dent, adjacent audit un des sommets (635) de dent.

2. **Propulseur aéronautique** selon la revendication 1, dans lequel les moyens d'entrainement comprennent un réducteur de vitesse (104) en prise avec les pales de l'une au moins des première série de pales (9) et deuxième série de pales (6), pour adapter la vitesse de rotation desdites pales autour de l'axe longitudinal central (X).

3. **Propulseur aéronautique** selon l'une quelconque des revendications précédentes, dans lequel les ondulations (93,63) sur une desdites pales présentent une amplitude h(r) maximale entre un sommet et un creux adjacents, h(r), telle que : 0.0005xCmax ≤ h(r) maximale ≤ 0.5xCmax, où Cmax est la corde maximale de la pale et h(r) correspond à la différence de corde entre un profil au niveau d'un sommet et un profil au niveau d'un creux adjacents dans la direction de l'envergure (L) de la pale, ou radialement à l'axe longitudinal central (X) .

4. **Propulseur aéronautique** selon l'une quelconque des revendications précédentes, dans lequel, sur certaines au moins des pales, les ondulations présentent une amplitude entre un sommet et un creux adjacent, h(r), et un espacement entre deux sommets successifs d'ondulations, λ(r), qui varient radialement.

5. **Propulseur aéronautique** selon l'une quelconque des revendications précédentes, dans lequel, le long du bord d'attaque et/ou du bord de fuite, les ondulations s'étendent selon une longueur H cumulée qui est limitée à : H/(Re-Ri) < 0.8.

6. **Propulseur aéronautique** selon l'une quelconque des revendications précédentes, dans lequel les ondulations de bord d'attaque (63) et/ou de bord de fuite (93) sont situées :
- au-delà de 0.4x(Re-Ri), en partant du côté de l'extrémité de connexion (53), et/ou
- là où la corde (C) est la plus grande.

7. **Propulseur aéronautique** selon l'une quelconque des revendications précédentes, dans lequel les moyens d'entrainement comprennent une turbine à gaz (21,23,24,96,102) pour ledit entraînement en rotation autour de l'axe longitudinal central (X) des pales de l'une au moins des première série de pales (9) et deuxième série de pales (6), dans lequel la turbine à gaz (21,23,24,96,102) appartient à un moteur (3) d'entraînement en rotation des pales autour de l'axe longitudinal central (X) et la première série de pales (9) et la deuxième série de pales (6) sont situées vers une extrémité amont du moteur (3).

8. **Propulseur aéronautique** selon l'une quelconque des revendications précédentes, dans lequel :
- la nacelle (5) présente une entrée d'air (35), et
- sur la nacelle (5), l'entrée d'air (35) est située axialement entre les axes de calage (390,360) des pales de la première série de pales (9) et de la deuxième série de pales (6).

9. **Propulseur aéronautique** selon l'une quelconque des revendications précédentes, dans lequel les moyens d'entrainement comprennent une turbine à gaz (21,23,24,96,102) pour ledit entraînement en rotation autour de l'axe longitudinal central (X) des pales de l'une au moins des première série de pales (9) et deuxième série de pales (6), dans lequel la turbine (21,23,96,102) est reliée à la première série de pales (9) pour entraîner en rotation autour de l'axe longitudinal central (X) uniquement les pales (90) de la première série de pales (9), les pales de la deuxième série de pales (6) définissant des pales de redresseur d'air (60).

10. **Propulseur aéronautique** selon l'une quelconque des revendications précédentes, dans lequel les ondulations (93,63) sont situées au moins sur le bord de fuite (91) de la première série de pales (9) et sur le bord d'attaque (61) de la deuxième série de pales (6).

11. **Propulseur aéronautique** selon l'une quelconque des revendications précédentes, dans lequel :
- les ondulations (93,63) au bord d'attaque (61) et au bord de fuite (91) présentent des géométries ou motifs différents entre elles, et/ou
- suivant l'un au moins parmi les motif, amplitude, espacement, positionnement radial des ondulations le long de l'envergure, les ondulations (93,63) de certaines des pales de la première série de pales (9) sont différentes, des ondulations (93,63) de certaines des pales de la deuxième série de pales (6).

12. **Propulseur aéronautique** selon l'une quelconque des revendications précédentes, dans lequel, sur une zone de bord d'attaque (61) ou de bord de fuite (91) d'une pale présentant des ondulations (63,93), une variation d'angle de squelette (Δβ1) au bord d'attaque ou (Δβ2) au bord de fuite, entre un sommet (635) de dent et un creux (634) de dent, adjacents entre eux,
- suivant l'envergure (L) de la pale (90,60), ou
- radialement à l'axe longitudinal central (X),
est inférieure à 45°.

13. **Propulseur aéronautique** selon l'une quelconque des revendications précédentes, dans lequel, sur une zone de bord d'attaque (61) ou de bord de fuite (91) d'une pale présentant des ondulations (63,93), une variation d'angle de squelette (Δβ1) au bord d'attaque ou (Δβ2) au bord de fuite, entre deux sommets (630,631) de dents adjacents entre eux et/ou deux creux (632,634) de dent adjacents entre eux,
- suivant l'envergure (L) de la pale (90,60), ou
- radialement à l'axe longitudinal central (X),
est inférieure à 45°.

14. **Propulseur aéronautique** selon l'une quelconque des revendications précédentes, dans lequel certaines au moins desdites pales de la première série de pales (9) et/ou de la deuxième série de pales (6) présentent chacune, suivant l'envergure (L) de la pale (90,60) ou radialement à l'axe longitudinal central (X), une variation d'angle de calage (Δγ) inférieure à 45°, entre :
-- une troisième droite reliant le bord d'attaque et le bord de fuite, à un premier rayon où est situé un premier desdits sommets (635) de dent, et
-- une quatrième droite reliant le bord d'attaque et le bord de fuite, à un deuxième rayon où est situé un second desdits sommets (635) de dent, adjacent audit premier sommet.

15. **Propulseur aéronautique** selon l'une quelconque des revendications précédentes, dans lequel, au moins l'une des pales (90,60) de l'une des hélices (9,6) présente une flèche la plus grande à une position radiale située sur une longueur radiale de 0.4x(Re-Ri) de l'extrémité libre (51).

## Patentansprüche

1. Luftfahrtantrieb, entlang dem eine Gasströmung von stromaufwärts nach stromabwärts strömen kann, wobei der Antrieb eine Mittellängsachse (X) aufweist und umfasst:
a) eine erste Schaufelreihe (9),
b) eine zweite Schaufelreihe (6), die stromabwärts von der ersten Schaufelreihe (9) positioniert ist,
- Antriebsmittel (3, 18, 21, 23, 40, 94, 104, 920) zum Antreiben der Schaufeln zumindest einer aus erster Schaufelreihe (9) und zweiter Schaufelreihe (6) in Drehung um die Mittellängsachse,
c) eine Gondel (5) mit einer aerodynamischen Außenfläche (50), von der die erste Schaufelreihe (9) und die zweite Schaufelreihe (6) radial bezüglich der Mittellängsachse (X) abragen, wobei jede Schaufel der ersten Schaufelreihe und der zweiten Schaufelreihe aufweist:
-- ein freies Ende (51), das einem Anbindungsende (53) entgegengesetzt, das einen Schaufelfuß nahe der Gondel (5) bildet,
-- eine Unterseite (55) und eine Oberseite (57),
-- an einem auf der Mittellängsachse (X) zentrierten Radius eine Sehne C,
-- einen Radius (Ri) zwischen der Mittellängsachse (X) und einer Stelle an der Schaufel oder einem Anstellarm (39, 36) der Schaufel, die auf gleicher Höhe mit der Außenfläche (50) der Gondel (5) liegt,
-- einen Radius (Re) zwischen der Längsmittelachse (X) und einer Stelle am freien Ende (51) der Schaufel, die in einer Querrichtung quer zur Längsmittelachse (X) am weitesten von der Längsmittelachse (X) entfernt liegt, und
-- eine Spannweite (L), die radial zur Längsmittelachse (X), zwischen dem freien Ende (51) und dem Anbindungsende (53) entlang der genannten Querrichtung definiert ist,
wobei zumindest einige der Schaufeln der ersten Schaufelreihe (9) variabel anstellbar sind, so dass jede von ihnen um einen Anstellarm (39), an dem die Schaufel befestigt ist, verschwenkbar ist, und zwar um eine durch die Schaufel (90) verlaufende Anstellachse (390), und/oder wobei zumindest einige der Schaufeln der zweiten Schaufelreihe (6) variabel anstellbar sind, so dass jede von ihnen um einen Anstellarm (36), an dem die Schaufel befestigt ist, verschwenkbar ist, und zwar um eine durch die Schaufel (60) verlaufende Anstellachse (360),
wobei bei dem Antrieb
- zumindest eine der Schaufeln der ersten Schaufelreihe (9) eine Hinterkante (91) aufweist, entlang der sich Wellen (93) erstrecken und/oder zumindest eine der Schaufeln der zweiten Schaufelreihe (6) eine Vorderkante (61) aufweist, entlang der sich Wellen (63) erstrecken, wobei die Wellen wechselweise aufeinanderfolgende Wellenberge (635) und Wellentäler (634) aufweisen, und
- zumindest einige der Schaufeln der ersten Schaufelreihe (9) und/oder der zweiten Schaufelreihe (6) jeweils entlang der Spannweite (L) der Schaufel (90, 60) oder radial zur Längsmittelachse (X) eine Anstellwinkelabweichung (Δy) von weniger als 45° aufweisen zwischen:
-- einer ersten Gerade, die die Vorderkante und die Hinterkante verbindet, und zwar an einem ersten Radius, an dem sich einer der Wellenberge (635) befindet, und
-- einer zweiten Gerade, die die Vorderkante und die Hinterkante verbindet, und zwar an einem zweiten Radius, an dem sich eines der Wellentäler (634) befindet, das an den einen der Wellenberge (635) angrenzt.

2. Luftfahrtantrieb nach Anspruch 1,
wobei die Antriebsmittel ein Untersetzungsgetriebe (104) umfassen, das mit den Schaufeln zumindest einer aus erster Schaufelreihe (9) und zweiter Schaufelreihe (6) in Eingriff steht, um die Drehgeschwindigkeit der Schaufeln um die Mittellängsachse (X) anzupassen.

3. Luftfahrtantrieb nach einem der vorstehenden Ansprüche,
wobei die Wellen (93, 63) an einer der Schaufeln eine maximale Höhe h(r) zwischen einem Wellenberg und einem benachbarten Wellental aufweisen, sodass gilt: 0,0005xCmax ≤ maximale h(r) ≤ 0,5xCmax, wobei Cmax die maximale Sehne der Schaufel ist und h(r) der Sehnendifferenz zwischen einem Profil im Bereich eines Wellenbergs und einem Profil im Bereich eines benachbarten Wellentals in Richtung der Spannweite (L) der Schaufel oder radial zur Längsmittelachse (X) entspricht.

4. Luftfahrtantrieb nach einem der vorstehenden Ansprüche,
wobei zumindest an einigen der Schaufeln die Wellen eine Höhe h(r) zwischen einem Wellenberg und einem benachbarten Wellental und einen Abstand A(r) zwischen zwei aufeinanderfolgenden Wellenbergen aufweisen, die sich radial ändern.

5. Luftfahrtantrieb nach einem der vorstehenden Ansprüche,
wobei sich die Wellen entlang der Vorderkante und/oder der Hinterkante über eine kumulierte Länge H erstrecken, die begrenzt ist auf: H/(Re-Ri) < 0,8.

6. Luftfahrtantrieb nach einem der vorstehenden Ansprüche,
wobei die Wellen der Vorderkante (63) und/oder der Hinterkante (93) angeordnet sind:
- jenseits von 0,4x(Re-Ri), ausgehend von der Seite des Anbindungsendes (53), und/oder
- dort, wo die Sehne (C) am größten ist.

7. Luftfahrtantrieb nach einem der vorstehenden Ansprüche,
wobei die Antriebsmittel eine Gasturbine (21, 23, 24, 96, 102) zum Antreiben der Schaufeln zumindest einer aus erster Schaufelreihe (9) und zweiter Schaufelreihe (6) in Drehung um die Mittellängsachse (X) umfassen, wobei die Gasturbine (21, 23, 24, 96, 102) zu einem Motor (3) zum Antreiben der Schaufeln in Drehung um die Mittellängsachse (X) gehört und die erste Schaufelreihe (9) und die zweite Schaufelreihe (6) sich in Richtung eines stromaufwärtigen Endes des Motors (3) befinden.

8. Luftfahrtantrieb nach einem der vorstehenden Ansprüche,
wobei
- die Gondel (5) einen Lufteinlass (35) aufweist und
- sich der Lufteinlass (35) an der Gondel (5) axial zwischen den Anstellachsen (390, 360) der Schaufeln der ersten Schaufelreihe (9) und der zweiten Schaufelreihe (6) befindet.

9. Luftfahrtantrieb nach einem der vorstehenden Ansprüche,
wobei die Antriebsmittel eine Gasturbine (21, 23, 24, 96, 102) zum Antreiben der Schaufeln zumindest einer aus erster Schaufelreihe (9) und zweiter Schaufelreihe (6) in Drehung um die Mittellängsachse (X) umfassen, wobei die Gasturbine (21, 23, 24, 96, 102) mit der ersten Schaufelreihe (9) verbunden ist, um nur die Schaufeln (90) der ersten Schaufelreihe (9) um die Mittellängsachse (X) drehend anzutreiben, wobei die Schaufeln der zweiten Schaufelreihe (6) Leitschaufeln (60) bilden.

10. Luftfahrtantrieb nach einem der vorstehenden Ansprüche,
wobei die Wellen (93, 63) zumindest an der Hinterkante (91) der ersten Schaufelreihe (9) und an der Vorderkante (61) der zweiten Schaufelreihe (6) angeordnet sind.

11. Luftfahrantrieb nach einem der vorstehenden Ansprüche,
wobei
- die Wellen (93,63) an der Vorderkante (61) und an der Hinterkante (91) zueinander unterschiedliche Geometrien oder Muster aufweisen und/oder
- die Wellen (93,63) einiger Schaufeln der ersten Schaufelreihe (9) sich hinsichtlich zumindest eines der Merkmale aus Gestalt, Höhe, Abstand, radiale Positionierung der Wellen entlang der Spannweite von den Wellen (93,63) einiger Schaufeln der zweiten Schaufelreihe (6) unterscheiden.

12. Luftfahrtantrieb nach einem der vorstehenden Ansprüche,
wobei in einem Bereich der Vorderkante (61) oder Hinterkante (91) einer Schaufel mit Wellen (63, 93) eine Skelettwinkelabweichung (Δβ1) an der Vorderkante oder (Δβ2) an der Hinterkante zwischen einem Wellenberg (635) und einem Wellental (634), die aneinander angrenzen,
- entlang der Spannweite (L) der Schaufel (90, 60) oder
- radial zur Längsmittelachse (X)
weniger als 45° beträgt.

13. Luftfahrantrieb nach einem der vorstehenden Ansprüche,
wobei in einem Bereich der Vorderkante (61) oder Hinterkante (91) einer Schaufel mit Wellen (63, 93) eine Skelettwinkelabweichung (Δβ1) an der Vorderkante oder (Δβ2) an der Hinterkante zwischen zwei benachbarten Wellenbergen (630, 631) und/oder zwei benachbarten Wellentälern (632, 634)
- entlang der Spannweite (L) der Schaufel (90, 60) oder
- radial zur Längsmittelachse (X)
weniger als 45° beträgt.

14. Luftfahrtantrieb nach einem der vorstehenden Ansprüche,
wobei zumindest einige der Schaufeln der ersten Schaufelreihe (9) und/oder der zweiten Schaufelreihe (6) jeweils entlang der Spannweite (L) der Schaufel (90, 60) oder radial zur Längsmittelachse (X) eine Anstellwinkelabweichung (Δy) von weniger als 45° aufweist, und zwar zwischen
-- einer dritten Geraden, die die Vorderkante und die Hinterkante verbindet, und zwar bei einem ersten Radius, an dem sich ein erster der Wellenberge (635) befindet, und
-- einer vierten Geraden, die die Vorderkante und die Hinterkante verbindet, und zwar bei einem zweiten Radius, an dem sich ein zweiter der Wellenberge (635) befindet, der an den ersten Wellenberg angrenzt.

15. Luftfahrtantrieb nach einem der vorstehenden Ansprüche,
wobei zumindest eine der Schaufeln (90, 60) eines der Propeller (9, 6) eine größte Pfeilung an einer radialen Position aufweist, die sich auf einer radialen Länge von 0,4x(Re-Ri) vom freien Ende (51) befindet.

## Claims

1. **An aeronautical propulsion unit** along which a gas flow can circulate from upstream to downstream, the propulsion unit having a central longitudinal axis (X), and comprising:
a) a first series of blades (9),
b) a second series of blades (6) positioned downstream of the first series of blades (9),
- drive means (3,18,21,23,40,94,104,920) for rotating the blades of at least one among the first series of blades (9) and the second series of blades (6), about the central longitudinal axis c) a nacelle (5) which has an aerodynamic external surface (50) relative to which the first series of blades (9) and the second series of blades (6) project radially to the central longitudinal axis (X), each blade of the first series of blades and second series of blades having:
-- a free end (51) opposite to a connection end (53) forming a blade root close to the nacelle (5),
-- a pressure side face (55) and a suction side face (57),
-- a chord line C, at a radius centered on the central longitudinal axis (X),
-- a radius (Ri) between the central longitudinal axis (X) and a location, on the blade or a pitch arm (39,36) of the blade, which is level with the external surface (50) of the nacelle (5),
-- a radius (Re) between the central longitudinal axis (X) and a location, on the free end (51) of the blade, that is farthest from the central longitudinal axis (X), in a direction transverse to the central longitudinal axis (X), and
-- a span (L), defined, radially to the central longitudinal axis (X), between the free end (51) and the connection end (53), in said transverse direction,
at least some of the blades of the first series of blades (9) having variable pitch, such that each of them can pivot around a pitch arm (39) to which said blade is fixed, about a pitch axis (390) which passes through the blade (90), and/or
at least some of the blades of the second series of blades (6) having variable pitch, such that each of them can pivot around a pitch arm (36) to which said blade is fixed, about a pitch axis (360) which passes through the blade (60),
**wherein** in said propulsion unit:
- at least one of the blades of the first series of blades (9) has a trailing edge (91) having serrations (93), and/or at least one of the blades of the second series of blades (6) has a leading edge (61) having serrations (63), said serrations having tooth tips (635) and tooth troughs (634) which successively alternate, and,
- at least some of said blades of the first series of blades (9) and/or of the second series of blades (6) each have, along the span (L) of the blade (90, 60) or radially to the central longitudinal axis (X), a pitch angle variation (Δγ) that is less than 45°, between:
-- a first straight line connecting the leading edge and the trailing edge, at a first radius where one of said tooth tips (635) is located, and
-- a second straight line connecting the leading edge and the trailing edge, at a second radius where one of said tooth troughs (634) is located, adjacent to said one of the tooth tips (635).

2. **Aeronautical propulsion unit** according to claim 1, wherein the drive means comprise a speed reducer (104) engaged with the blades of at least one of the first series of blades (9) and second series of blades (6), in order to adapt the rotation speed of said blades around the central longitudinal axis (X).

3. **Aeronautical propulsion unit** according to any one of the preceding claims, wherein the serrations (93,63) on one of said blades have a maximum amplitude h(r) between a tip and a trough which are adjacent, h(r), such that: 0.0005xCmax ≤ maximum h(r) ≤ 0.5xCmax, wherein Cmax is the maximum chord line of the blade and h(r) corresponds to the difference in chord line between a profile at a tip and a profile at a trough which are adjacent, along the direction of the span (L) of the blade or radially to the central longitudinal axis (X).

4. **Aeronautical propulsion unit** according to any one of the preceding claims, wherein, on at least some of the blades, the serrations have an amplitude between a tip and an adjacent trough, h(r), and a spacing between two successive serration tips, λ(r), which vary radially.

5. **Aeronautical propulsion unit** according to any one of the preceding claims, wherein, along the leading edge and/or the trailing edge, the serrations extend along a cumulative length H which is limited to: H/(Re -Ri) < 0.8.

6. **Aeronautical propulsion unit** according to any one of the preceding claims, wherein the leading edge serrations (63) and/or trailing edge serrations (93) are located:
- beyond 0.4x(Re-Ri), starting from the connection end (53) side, and/or
- there where the chord line (C) is the largest.

7. **Aeronautical propulsion unit** according to any one the preceding claims, wherein the gas turbine (21,23,24,96,102) is part of an engine (3) for driving the rotation of blades around the central longitudinal axis (X), and the first series of blades (9) and the second series of blades (6) are located towards an upstream end of the engine (3).

8. **Aeronautical propulsion unit** according to any one of the preceding claims, wherein:
- the nacelle (5) has an air inlet (35), and
- on the nacelle (5), the air inlet (35) is located axially between the pitch axes (390,360) of the blades of the first series of blades (9) and of the second series of blades (6).

9. **Aeronautical propulsion unit** according to any one of the preceding claims, wherein the drive means comprise a gas turbine (21,23,24,96,102) for driving the rotation around the central longitudinal axis (X) of blades of at least one of the first series of blades (9) and the second series of blades (6), wherein the turbine (21,23,24,96,102) is connected to the first series of blades (9) so as to drive in rotation around the central longitudinal axis (X) only the blades (90) of the first series of blades (9), the blades of the second series of blades (6) defining swirl recovery vanes (60).

10. **Aeronautical propulsion unit** according to any one of the preceding claims, wherein the serrations (93,63) are located at least on the trailing edge (91) of the first series of blades (9) and on the leading edge (61) of the second series of blades (6).

11. **Aeronautical propulsion unit** according to any one of the preceding claims, wherein:
- the serrations (93,63) at the leading edge (61) and at the trailing edge (91) have geometries or patterns that differ from each other, and/or
- the serrations (93,63) of some of the blades of the first series of blades (9) differ from the serrations (93,63) of some of the blades of the second series of blades (6) in at least one among the patterns, amplitude, spacing, and radial positioning of the serrations along the span.

12. **Aeronautical propulsion unit** according to any one of the preceding claims, wherein, on a leading edge (61) or trailing edge (91) area of a blade having serrations (63,93), a variation of skeleton angle (Δβ1) at the leading edge or (Δβ2) at the trailing edge, between a tooth tip (635) and a tooth trough (634), adjacent to one another,
- along the span (L) of the blade (90,60), or
- radially to the central longitudinal axis (X),
is less than 45°.

13. **Aeronautical propulsion unit** according to any one of the preceding claims, wherein, on a leading edge (61) or trailing edge (91) area of a blade having serrations (63,93), a variation in skeleton angle (Δβ1) at the leading edge or (Δβ2) at the trailing edge, between two tooth tips (630,631) adjacent to one another and/or two tooth troughs (632,634) adjacent to one another,
- along the span (L) of the blade (90,60), or
- radially to the central longitudinal axis (X),
is less than 45°.

14. **Aeronautical propulsion unit** according to any one of the preceding claims, wherein at least some of said blades of the first series of blades (9) and/or of the second series of blades (6) each have, along the span (L) of the blade (90,60) or radially to the central longitudinal axis (X), a pitch angle variation (Δγ) that is less than 45°, between:
-- a third straight line connecting the leading edge and the trailing edge, at a first radius where a first of said tooth tips (635) is located, and
-- a fourth straight line connecting the leading edge and the trailing edge, at a second radius where a second of said tooth tips (635) is located, adjacent to said first tip.

15. **Aeronautical propulsion unit** according to any one of the preceding claims, wherein at least one of the blades (90,60) of one of the series of blades (9,6) has the greatest deflection at a radial position located over a radial length of 0.4x(Re-Ri) from the free end (51).
